(19) Europäisches Patentamt
European Patent Office
Office européen des brevets

(11) **EP 4 435 675 A1**

(12) **EUROPEAN PATENT APPLICATION**
published in accordance with Art. 153(4) EPC

(43) Date of publication:
**25.09.2024 Bulletin 2024/39**

(21) Application number: **22910099.5**

(22) Date of filing: **21.12.2022**

(51) International Patent Classification (IPC):
***G06N 5/04*** *(2023.01)*

(52) Cooperative Patent Classification (CPC):
**G06N 5/04; G06N 20/00**

(86) International application number:
**PCT/CN2022/140797**

(87) International publication number:
**WO 2023/116787 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 CN 202111582987**

(71) Applicant: **Huawei Technologies Co., Ltd.
Shenzhen, Guangdong 518129 (CN)**

(72) Inventors:
• **MA, Mengyao
Shenzhen, Guangdong 518129 (CN)**
• **LAU, Kin Nang
Hong Kong 999077 (CN)**
• **SU, Liqun
Hong Kong 999077 (CN)**

(74) Representative: **Körber, Martin Hans et al
Mitscherlich PartmbB
Patent- und Rechtsanwälte
Karlstraße 7
80333 München (DE)**

(54) **INTELLIGENT MODEL TRAINING METHOD AND APPARATUS**

(57) This application provides a method and an apparatus for training an intelligent model. The method includes: A central node and a plurality of participant node groups jointly perform training of the intelligent model, the intelligent model consists of a plurality of feature models corresponding to a plurality of features of an inference target, participant nodes in one of the participant node groups train one of the feature models, and the training method is performed by a participant node, and includes: receiving, from the central node, first information that indicates an inter-feature constraint variable, where the inter-feature constraint variable represents a constraint relationship between different features; obtaining, based on the inter-feature constraint variable, a model parameter of a first feature model, and first sample data by using a gradient inference model, gradient information corresponding to the inter-feature constraint variable; and sending the gradient information to the central node. This implements distributed training based on different features through federated learning, and can improve performance of a model obtained through training.

```
Central node                                        First participant node
     |                                                        |
     |  S201: Send first information, where the first         |
     |  information includes an inter-feature constraint      |
     |  variable, and the inter-feature constraint variable   |
     |  represents a constraint relationship between          |
     |  different features                                    |
     |------------------------------------------------------->|
     |                                                        |
     |     S202: Obtain first gradient information based      |
     |     on the inter-feature constraint variable, a        |
     |     model parameter of a first feature model, and      |
     |     first sample data by using a gradient inference    |
     |     model, where the first gradient information is     |
     |     gradient information corresponding to the          |
     |     inter-feature constraint variable                  |
     |                                                        |
     |  S203: Send quantized first target gradient information |
     |<-------------------------------------------------------|
     |                                                        |
```

FIG. 2

**Description**

This application claims priority to Chinese Patent Application No. 202111582987.9, filed with the China National Intellectual Property Administration on December 22, 2021 and entitled "METHOD AND APPARATUS FOR TRAINING INTELLIGENT MODEL", which is incorporated herein by reference in its entirety.

**TECHNICAL FIELD**

This application relates to the communication field, and more specifically, to a method and an apparatus for training an intelligent model.

**BACKGROUND**

Artificial intelligence (artificial intelligence, AI) is a quite important application in future wireless communication networks (such as the Internet of Things). Federated learning (federated learning, FL) is a distributed intelligent model training method. A server provides model parameters for a plurality of devices. The plurality of devices separately perform intelligent model training based on respective datasets and then feed back gradient information of a loss function to the server. The server updates the model parameters based on the gradient information fed back by the plurality of devices.

A model of the plurality of devices participating in model training is the same as a model of the server, and types of training data used by the devices participating in model training are the same. For example, in training of an image recognition model, a plurality of image collection devices may train the model by using image data separately collected by the plurality of image collection devices. In this manner, diversity of training data can be improved, but diversity of features of an inference target is not considered. Currently, there is no effective solution for implementing model training with diversity of features in federated learning to improve model performance.

**SUMMARY**

This application provides a method and an apparatus for training an intelligent model, to implement distributed training based on different features through federated learning, so that performance of a model obtained through training can be improved.

According to a first aspect, a method for training an intelligent model is provided, where a central node and a plurality of participant node groups jointly perform training of the intelligent model, the intelligent model consists of a plurality of feature models corresponding to a plurality of features of an inference target, participant nodes in one of the participant node groups train one of the feature models, and the training method is performed by a first participant node that trains a first feature model and that is in the plurality of participant node groups, and the method includes: receiving first information from the central node, where the first information indicates an inter-feature constraint variable, and the inter-feature constraint variable represents a constraint relationship between different features; obtaining first gradient information based on the inter-feature constraint variable, a model parameter of the first feature model, and first sample data by using a gradient inference model, where the first gradient information is gradient information corresponding to the inter-feature constraint variable; and sending the first gradient information to the central node.

Based on the foregoing solution, as model parameters are updated in a model training process, different types of participant nodes calculate the gradient information corresponding to the inter-feature constraint variable, and feed back the gradient information to the central node. The central node updates, based on the gradient information that is of the inter-feature constraint variable and that is obtained through inference by participant nodes corresponding to different feature models, the inter-feature constraint variable that represents an association relationship between features, to implement inter-feature decoupling of the models. In this way, the different types of participant nodes can train different feature models based on the inter-feature constraint variable and local feature data, so that the central node can update the inter-feature constraint variable based on gradients that are of the inter-feature constraint variable and that are fed back by the different types of participant nodes. This implements diversity of training data and diversity of features of federated learning without a need to transmit raw data. To be specific, raw data leakage is avoided, and the performance of the trained model can be improved.

With reference to the first aspect, in some implementations of the first aspect, the method further includes: receiving a first identifier set from the central node, where the first identifier set includes an identifier of sample data of the inter-feature constraint variable selected by the central node; and the obtaining first gradient information based on the inter-feature constraint variable, a model parameter of the first feature model, and first sample data by using a gradient inference model, where the first gradient information is gradient information corresponding to the inter-feature constraint variable includes: determining that a sample data set of the first participant node includes the first sample data corresponding to a first identifier, where the first identifier belongs to the first identifier set; and obtaining the first gradient information based on the inter-feature constraint variable, the model parameter of the first feature model, and the first sample data by using the gradient inference model, where the first gradient information is the gradient information corresponding to the inter-feature constraint variable.

Based on the foregoing solution, the central node selects, by using the first identifier set, some sample data for inferring the gradient information of the inter-feature constraint variable. A participant node that stores the selected sample data infers, based on the model parameter of the current feature model and the sample data, the gradient information of the inter-feature constraint variable, and feeds back the gradient information to the central node. Compared with a manner in which each participant node participates in feeding back the gradient information of the inter-feature constraint variable, resource overheads and implementation complexity can be reduced.

With reference to the first aspect, in some implementations of the first aspect, the sending the first gradient information to the central node includes: sending quantized first target gradient information to the central node, where the first target gradient information includes the first gradient information, or the first target gradient information includes the first gradient information and first residual gradient information, and the first residual gradient information represents a residual amount that is of gradient information corresponding to the inter-feature constraint variable and that is not sent to the central node before the first gradient information is obtained.

Based on the foregoing solution, after one time of model training, the participant node may send, to the central node, the gradient information obtained through training and the residual amount that is of the gradient information and that is not sent to the central node before the current time of model training. In this way, the central node can obtain the residual gradient information, to improve model training efficiency.

With reference to the first aspect, in some implementations of the first aspect, the method further includes: obtaining second residual gradient information based on the first target gradient information and the quantized first target gradient information, where the second residual gradient information is a residual amount that is in the first target gradient information and that is not sent to the central node.

With reference to the first aspect, in some implementations of the first aspect, the method further includes: determining a first threshold based on first quantization noise information and channel resource information, where the first quantization noise information represents a loss introduced by quantization encoding and decoding on the first target gradient information. The sending quantized first target gradient information to the central node includes: determining that a metric value of the first target gradient information is greater than the first threshold; and sending the quantized first target gradient information to the central node.

With reference to the first aspect, in some implementations of the first aspect, the method further includes: if the metric value of the first target gradient information is less than or equal to the first threshold, determining not to send the quantized first target gradient information to the central node.

Based on the foregoing solution, the participant node determines, based on the quantization noise information and the channel resource information, the threshold that is of the metric value and that is used for determining whether to send the quantized target gradient information. In this manner, the loss introduced by the quantization encoding and decoding on the target information is considered, and whether to send the target information to the central node is determined, to implement adaptive scheduling of a channel environment by the participant node, thereby improving signal transmission reliability and channel resource utilization.

With reference to the first aspect, in some implementations of the first aspect, the method further includes: if the metric value of the first target gradient information is less than the first threshold, determining third residual gradient information, where the third residual gradient information is the first target gradient information.

With reference to the first aspect, in some implementations of the first aspect, the method further includes: obtaining the first quantization noise information based on the channel resource information, communication cost information, and the first target gradient information, where the communication cost information indicates a communication cost weight of a communication resource, and the communication resource includes transmission power and/or transmission bandwidth.

Based on the foregoing solution, the participant node may obtain the first quantization noise information based on the channel resource information, the communication cost information, and the first target gradient information, so that adaptive scheduling can be implemented based on the first quantization noise information, thereby improving signal transmission reliability and channel resource utilization.

With reference to the first aspect, in some implementations of the first aspect, the determining a first threshold based on first quantization noise information and channel resource information includes: determining the transmission bandwidth and/or the transmission power based on the first quantization noise information, the communication cost information, the channel resource information, and the first target gradient information, where the communication cost information indicates the communication cost weight of the communication resource, and the communication resource includes the transmission power and/or the transmission bandwidth; and determining the first threshold based on the first quantization noise information and the communication resource.

With reference to the first aspect, in some implementations of the first aspect, the method further includes:

receiving second information from the central node, where the second information indicates the communication cost information.

With reference to the first aspect, in some implementations of the first aspect, the method further includes: training the first feature model based on the inter-feature constraint variable and model training data, to obtain second gradient information; and sending the second gradient information to the central node.

Based on the foregoing solution, inter-feature decoupling of models is implemented by using the inter-feature constraint variable, so that different types of participant nodes can train different feature models based on the inter-feature constraint variable and the local feature data. This not only implements diversity of training data in federated learning, but also implements model training for different features. In this way, the performance of the trained model is improved.

With reference to the first aspect, in some implementations of the first aspect, the sending the second gradient information to the central node includes: sending quantized second target gradient information to the central node, where the second target gradient information includes the second gradient information, or the second target gradient information includes the second gradient information and fourth residual gradient information, and the fourth residual gradient information represents a residual amount that is of gradient information and that is not sent to the central node before the second gradient information is obtained.

With reference to the first aspect, in some implementations of the first aspect, the method further includes: obtaining fifth residual gradient information based on the second target gradient information and the quantized second target gradient information, where the fifth residual gradient information represents a residual amount that is in the second target gradient information and that is not sent to the central node.

With reference to the first aspect, in some implementations of the first aspect, the method further includes: determining a second threshold based on second quantization noise information and the channel resource information, where the second quantization noise information represents a loss introduced by quantization encoding and decoding on the second target gradient information; and the sending quantized second target gradient information to the central node includes: determining that a metric value of the second target gradient information is greater than the second threshold; and sending the quantized second target gradient information to the central node.

With reference to the first aspect, in some implementations of the first aspect, the method further includes: if the metric value of the second target gradient information is less than or equal to the second threshold, determining not to send the quantized second target gradient information to the central node.

With reference to the first aspect, in some implementations of the first aspect, the method further includes: if the metric value of the second target gradient information is less than the second threshold, determining sixth residual gradient information, where the sixth residual gradient information is the second target gradient information.

With reference to the first aspect, in some implementations of the first aspect, the method further includes: obtaining the second quantization noise information based on the channel resource information, the communication cost information, and the second target gradient information, where the communication cost information indicates the communication cost weight of the communication resource, and the communication resource includes the transmission power and/or the transmission bandwidth.

With reference to the first aspect, in some implementations of the first aspect, the determining a second threshold based on second quantization noise information and the channel resource information includes: determining the transmission bandwidth and/or the transmission power based on the second quantization noise information, the communication cost information, the channel resource information, and the second target gradient information, where the communication cost information indicates the communication cost weight of the communication resource, and the communication resource includes the transmission power and/or the transmission bandwidth; and determining the second threshold based on the second quantization noise information and the communication resource.

With reference to the first aspect, in some implementations of the first aspect, the method further includes: receiving third information from the central node, where the third information indicates an updated parameter of the first feature model; and updating the parameter of the first feature model based on the third information.

According to a second aspect, a method for training an intelligent model is provided, where a central node and a plurality of participant node groups jointly perform training of the intelligent model, the intelligent model consists of a plurality of feature models corresponding to a plurality of features of an inference target, participant nodes in one of the participant node groups train one of the feature models, and the training method is performed by the central node, and includes: determining an inter-feature constraint variable, where the inter-feature constraint variable represents a constraint relationship between different features; and sending first information to a participant node in the plurality of participant node groups, where the first information includes the inter-feature constraint variable.

With reference to the second aspect, in some implementations of the second aspect, the method further includes: receiving at least one piece of second target gradient information from a participant node in a first participant node group, where the plurality of participant node groups include the first participant node group; determining an updated model parameter of a first feature model based on the at least one piece of second target gradient information, where the first feature model is a feature model trained by the participant node in the first participant node group; and sending the updated model parameter to the first participant node group.

Optionally, that the central node receives the at least one piece of second target gradient information from the participant node in the first participant node group may be specifically: The central node receives at least one piece of quantized second target gradient information from the participant node in the first participant node group, and performs quantization decoding on the quantized second target gradient information to obtain the second target gradient information. It should be understood that, based on the descriptions of the specific implementations in this specification, compared with the second target gradient information before the participant node performs quantization encoding, the second target gradient information obtained by the central node through quantization decoding may have a loss introduced by quantization encoding and decoding.

With reference to the second aspect, in some implementations of the second aspect, the method further includes: sending a first identifier set to the participant node in the plurality of participant node groups, where the first identifier set includes an identifier of sample data of the inter-feature constraint variable selected by the central node.

With reference to the second aspect, in some implementations of the second aspect, the method further includes: receiving a plurality of pieces of first target gradient information from the participant node in the plurality of participant node groups, where the first target gradient information is gradient information that corresponds to the inter-feature constraint variable and that is inferred by the participant node; and the determining an inter-feature constraint variable includes: determining the inter-feature constraint variable based on the plurality of pieces of first target gradient information.

With reference to the second aspect, in some implementations of the second aspect, the method further includes: sending second information to the participant node in the plurality of participant node groups, where the second information indicates communication cost information, the communication cost information indicates a communication cost weight of a communication resource, and the communication resource includes transmission power and/or transmission bandwidth.

According to a third aspect, a communication method is provided, including: determining a threshold based on quantization noise information and channel resource information, where the quantization noise information represents a loss introduced by quantization encoding and decoding on target information; and if a metric value of the target information is greater than the threshold, sending quantized target information; or if the metric value of the target information is less than or equal to the threshold, skipping sending the quantized target information.

Based on the foregoing solution, the participant node determines, based on the to-be-transmitted target information and the communication cost information that is broadcast by the central node by considering the loss introduced by the quantization encoding and decoding on the target information, whether to send the target information to the central node, to implement adaptive scheduling of a channel environment by the participant node, thereby improving reliability of target signal transmission and channel resource utilization.

With reference to the third aspect, in some implementations of the third aspect, the target information includes gradient information obtained through an $N^{th}$ time of model training and first target residual information, and the first target residual information is a residual amount that is of gradient information and that is not sent before the gradient information is obtained.

With reference to the third aspect, in some implementations of the third aspect, the method further includes: if the metric value of the target information is greater than the threshold, obtaining second target residual information based on the target information and the quantized target information, where the second target residual information is a residual amount that is not sent and that is in the target information.

With reference to the third aspect, in some implementations of the third aspect, the method further includes: if the metric value of the target information is less than or equal to the threshold, determining third target residual information, where the third target residual information is the target information.

With reference to the third aspect, in some implementations of the third aspect, the method further includes: obtaining the quantization noise information based on the channel resource information, communication cost information, and the target information, where the communication cost information indicates a communication cost weight of a communication resource, and the communication resource includes transmission power and/or transmission bandwidth.

With reference to the third aspect, in some implementations of the third aspect, the determining a threshold based on quantization noise information and channel resource information includes: determining the transmission bandwidth and/or the transmission power based on the quantization noise information, the communication cost information, the channel resource information, and the target information, where the communication cost information indicates the communication cost weight of the communication resource, and the communication resource includes the transmission power and/or the transmission bandwidth; and determining the threshold based on the quantization noise information and the communication resource.

With reference to the third aspect, in some implementations of the third aspect, the method further includes: receiving second information, where the second information indicates the communication cost information.

According to a fourth aspect, an apparatus for training an intelligent model is provided, including: a transceiver unit, configured to receive first information from a central node, where the first information indicates an inter-feature constraint variable, and the inter-feature constraint variable represents a constraint relationship between different features; and a processing unit, configured to obtain first gradient information based on the inter-feature constraint variable, a model parameter of a first feature model, and first sample data by using a gradient inference model, where the first gradient information is gradient information corresponding to the inter-feature constraint variable; and the transceiver unit is further configured to send the first gradient information to the central node.

According to a fifth aspect, an apparatus for training an intelligent model is provided, including: a processing unit, configured to determine an inter-feature constraint variable, where the inter-feature constraint variable represents a constraint relationship between different features; and a transceiver unit, configured to send first information to a participant node in the plurality of participant node groups, where the first information includes the inter-feature constraint variable.

According to a sixth aspect, an intelligent communication apparatus is provided, including: a processing unit, configured to determine a threshold based on quantization noise information and channel resource information, where the quantization noise information represents a loss introduced by quantization encoding and decoding on target information; and a transceiver unit, configured to: if a metric value of the target information is greater than the threshold, send quantized target information; or if the metric value of the target information is less than or equal to the threshold, skip sending the quantized target information.

According to a seventh aspect, a communication apparatus is provided, including a processor. The processor may implement the method in any one of the first aspect and the possible implementations of the first aspect, or implement the method in any one of the second aspect and the possible implementations of the second aspect, or implement the method in any one of the third aspect and the possible implementations of the third aspect.

Optionally, the communication apparatus further includes a memory. The processor is coupled to the memory, and may be configured to execute instructions in the memory, to implement the method in any one of the first aspect and the possible implementations of the first aspect, or implement the method in any one of the second aspect and the possible implementations of the second aspect, or implement the method in any one of the third aspect and the possible implementations of the third aspect.

Optionally, the communication apparatus further includes a communication interface, where the processor is coupled to the communication interface. In this embodiment of this application, the communication interface may be a transceiver, a pin, a circuit, a bus, a module, or another type of communication interface. This is not limited.

In an implementation, the communication apparatus is a communication device. When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface, and the processor may be a logic circuit.

Optionally, the transceiver may be a transceiver circuit. Optionally, the input/output interface may be an input/output circuit.

According to an eighth aspect, a processor is provided, including: an input circuit, an output circuit, and a processing circuit. The processing circuit is configured to: receive a signal by using the input circuit, and transmit a signal by using the output circuit, to enable the processor to perform the method in any one of the first aspect and the possible implementations of the first aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit respectively at different moments. Specific implementations of the processor and the various circuits are not limited in this embodiment of this application.

According to a ninth aspect, a computer program product is provided. The computer program product includes a computer program (which may also be referred to as code or instructions). When the computer program runs, a computer is enabled to perform the method in any one of the first aspect and the possible implementations of the first aspect, or implement the method in any one of the second aspect and the possible implementations of the second aspect, or implement the method in any one of the third aspect and the possible implementations of the third aspect.

According to a tenth aspect, a computer-readable storage medium is provided. The computer-readable storage medium stores a computer program (which may also be referred to as code or instructions). When the computer program runs on a computer, the computer is enabled to perform the method in any one of the first aspect and the possible implementations of the first aspect, or implement the method in any one of the second aspect and the possible implementations of the second aspect, or implement the method in any one of the third aspect and the possible implementations of the third aspect.

According to an eleventh aspect, a communication system is provided, including the foregoing plurality of participant nodes and at least one central node.

For technical effects that can be achieved by any one of the second aspect to the eleventh aspect and any possible implementation of any one of the second aspect to the eleventh aspect, refer to descriptions of technical effects that can be achieved by the first aspect and the corresponding implementations of the first aspect. Details are not described herein again.

## BRIEF DESCRIPTION OF DRAWINGS

FIG. 1 is a diagram of a communication system to which an embodiment of this application is applicable;
FIG. 2 is a schematic flowchart of a method for training an intelligent model according to an embodiment of this application;
FIG. 3 is another schematic flowchart of a method for training an intelligent model according to an embodiment of this application;
FIG. 4 is a diagram of sharing a transmission resource by a plurality of participant nodes according to an embodiment of this application;
FIG. 5 is a block diagram of an example of a communication apparatus according to this application; and
FIG. 6 is a diagram of a structure of an example of a communication device according to this application.

## DESCRIPTION OF EMBODIMENTS

In embodiments of this application, "/" may indicate an "or" relationship between associated objects. For example, A/B may indicate A or B. "And/or" may be used to describe three relationships between associated obj ects. For example, A and/or B may indicate the following three cases: Only A exists, both A and B exist, and only B exists, where A and B may be singular or plural. To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, a term such as "example" or "for example" indicates an example, an illustration, or a description. Any embodiment or design scheme described as an "example" or "for example" should not be explained as being more preferred or having more advantages than another embodiment or design scheme. Use of the term such as "example" or "for example" is intended to present a relative concept in a specific manner for ease of understanding.

In embodiments of this application, "at least one (type)" may alternatively be described as "one (type) or more (types)", and "a plurality of (types)" may be two (types), three (types), four (types), or more (types). This is not limited this application.

The following describes the technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, a future communication system (for example, a 6th generation (6th generation, 6G) communication system), or a system integrating a plurality of communication systems. This is not limited in embodiments of this application. 5G may also be referred to as new radio (new radio, NR).

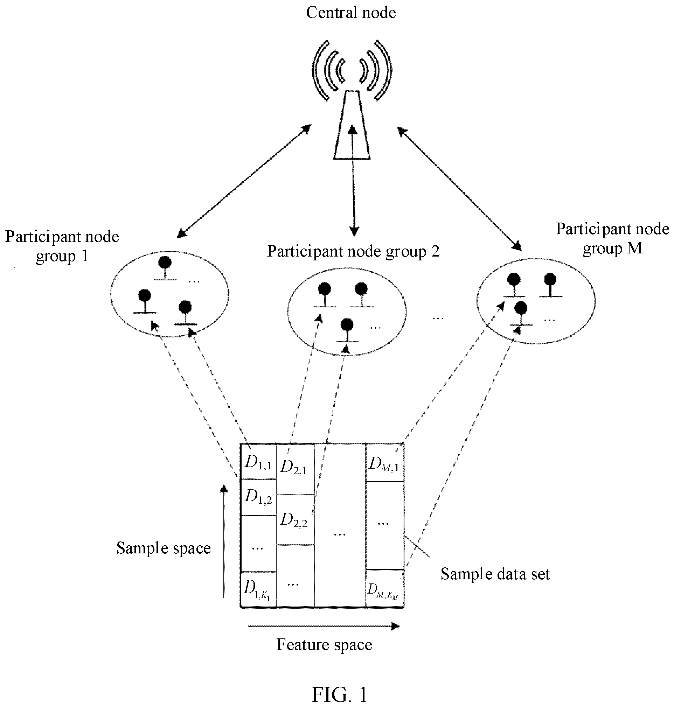

FIG. 1 is a diagram of a communication system to which an embodiment of this application is applicable.

As shown in FIG. 1, a communication system to which an embodiment of this application is applicable may include at least one central node and a plurality of participant node groups. The central node and the plurality of participant node groups perform federated learning of an intelligent model. The intelligent model includes a plurality of feature models corresponding to a plurality of features of an inference target. Participant nodes in one of the participant node groups train one feature model. Training samples (or referred to as training data or sample data) used by participant nodes in a same participant node group to train a feature model are different, or training samples of participant nodes in a same participant node group belong to different sample spaces. Sample features of training samples used by participant nodes in different participant node groups to train feature models are different, or training samples of participant nodes in different participant node groups belong to different feature spaces. The central node and the participant nodes may decouple the intelligent model into the plurality of feature models based on different features according to a method for training an intelligent model provided in an embodiment of this application. Different participant node groups train different feature models based on corresponding feature sample data. Then, the central node aggregates gradient information fed back by the participant nodes after training, and updates parameters of the intelligent model. Model training with diversified features is implemented, and model performance can be improved.

The central node provided in embodiments of this application may be a network device, for example, a server or a base station. The central node may be a device that is deployed in a radio access network and that can directly or indirectly communicate with a participant node.

The participant node provided in embodiments of this application may be a device having a transceiver function, for example, a terminal or a terminal device. For example, the participant node may be a sensor or a device having a data collection function. The participant node may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The participant node may be user equipment (user equipment, UE), and the UE includes a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), and/or the like.

The technical solutions provided in embodiments of this application may be applied to a plurality of scenarios, for example, smart retail, smart home, video surveillance (video surveillance), a vehicle network (such as autonomous driving and self-driving), and an industrial wireless sensor network (industrial wireless sensor network, IWSN). However, this application is not limited thereto.

In an implementation, the technical solutions provided in this application may be applied to a smart home, to provide a personalized service for a customer based on a customer requirement. The central node may be a base station or a server, and the participant node may be a client device disposed in each home. Based on the technical solutions provided in this application, the client device provides the server only with gradient information that is obtained through model training based on local data and that will be synthesized through a router, so that training result information can be shared with the server when customer data privacy is protected. The server obtains aggregated gradient information of the synthesized gradient information provided by a plurality of client devices, determines updated model parameters, and notifies each client device of the updated model parameters, to continue training of the intelligent model. After completing the model training, the client device uses a trained model to provide a personalized service for a customer.

In another implementation, the technical solutions provided in this application may be applied to an industrial wireless sensor network, to implement industrial intelligence. The central node may be a server, and the participant nodes may be a plurality of sensors (for example, mobile intelligent robots) in a factory. After performing model training based on local data, the sensors send synthesized gradient information to the server, and the server determines updated model parameters based on the aggregated gradient information of the synthesized gradient information provided by the sensors, and notifies each sensor of the updated model parameters, and continues to train the intelligent model. After completing model training, the sensor uses a trained model to execute a task for the factory. For example, the sensor is a mobile intelligent robot, and may obtain a moving route based on the trained model, to complete a factory transportation task, an express package sorting task, and the like.

To better understand embodiments of this application, terms used in this specification are briefly described below.

1. Artificial intelligence AI

The artificial intelligence AI enables a machine to have a learning capability and accumulate experience, so that the machine may resolve a problem, such as natural language understanding, image recognition, and/or chess playing, that can be resolved by humans through experience.

2. Neural network (neural network, NN): As an important branch of artificial intelligence, a neural network is a network structure that imitates a behavior feature of an animal neural network to perform information processing. A structure of the neural network includes a large quantity of nodes (or referred to as neurons) that are connected to each other. The neural network is based on a specific operation model, and processes information by learning and training input information. One neural network includes an input layer, a hidden layer, and an output layer. The input layer is responsible for receiving an input signal, the output layer is responsible for outputting a calculation result of the neural network, and the hidden layer is responsible for complex functions such as feature expression. A function of the hidden layer is represented by a weight matrix and a corresponding activation function.

A deep neural network (deep neural network, DNN) is generally of a multi-layer structure. Increasing a depth and/or a width of a neural network can improve an expression capability of the neural network, and provide more powerful information extraction and abstract modeling capabilities for a complex system. The depth of the neural network may be represented as a quantity of layers of the neural network. For one layer, a width of the neural network may be represented as a quantity of neurons included in the layer.

There may be a plurality of manners of constructing the DNN, for example, including but not limited to, a recurrent neural network (recurrent neural network, RNN), a convolutional neural network (convolutional neural network, CNN), and a fully-connected neural network.

3. Training (training) or learning

Training is a process of processing a model (or referred to as a training model). In the processing process, parameters in the model, for example, a weighted value, are optimized, so that the model learns to execute a specific task. Embodiments of this application are applicable to but are not limited to one or more of the following training methods: supervised learning, unsupervised learning, reinforcement learning, transfer learning, and the like. Supervised learning is training using a group of training samples that have been correctly labeled. Having been correctly labeled means that each sample has an expected output value. Unlike supervised learning, unsupervised learning is a method that automatically classifies or groups input data without giving a pre-labeled training sample.

4. Inference

Inference means performing data processing by using a trained model (the trained model may be referred to as an inference model). Actual data is input into the inference model for processing, to obtain a corresponding inference result. Inference may also be referred to as prediction or decision, and the inference result may also be referred to as a prediction result, a decision result, or the like.

5. Conventional federated learning (federated learning)

Federated learning is a distributed AI training method that a training process of an AI algorithm is performed on a plurality of devices instead of being aggregated to one server, so that problems of time consumption and a large quantity of communication overheads caused by data collection during centralized AI training can be resolved. In addition, because device data does not need to be sent to a server, privacy security problems can also be reduced. A specific process is as follows: A central node sends an AI model to a plurality of participant nodes, and the participant nodes perform AI model training based on data of the participant nodes, and report an AI model trained by the participant nodes to the central node in a gradient manner. The central node aggregates gradient information fed back by the plurality of participant nodes, to obtain parameters of a new AI model. The central node may send the updated parameters of the AI model to the plurality of participant nodes, and the participant nodes perform training on the AI model again. In different federated learning processes, participant nodes selected by the central node may be the same or may be different. This is not limited in this application.

In conventional federated learning, the trained model of the plurality of participant nodes is the same as a model of the server, and types of training data used by devices participating in model training are the same, and this may be referred to as a homogeneous network (homogeneous network). For example, in training of an image recognition model, a plurality of image collection devices may train the model by using image data collected by the plurality of image collection devices. In this manner, diversity of training data can be improved, but diversity of features of an inference target is not considered. For example, when classification is performed based on both images and audio of animals, classification between cats and dogs can be more accurate. For another example, in the Internet of Vehicles, a camera, a positioning system, and an inertia measurement unit (inertial measurement unit, IMU) are configured to collect data of different types (features), to estimate a position of a vehicle or distinguish a traffic condition in a road network, so that learning performance can be improved. In addition, for different feature data, training effects of different models are different. For example, an automatic encoder combined with a classification neural network is generally used to extract and classify features of an audio signal, and a convolutional neural network is generally used to process image data. In this application, it is considered that different types of participant nodes and the central node form the heterogeneous network (heterogeneous network) for federated learning, and the different types of participant nodes respectively train sub-models corresponding to different features of the inference target in the intelligent model, so that the performance of a trained intelligent model can be improved. However, there is an association relationship (or a coupling relationship) between the different features. To separately train different sub-models by the different participant node groups, this application proposes that the central node provides, for the different types of participant nodes, an inter-feature constraint variable that represents the association relationship between the features, so as to implement inter-feature decoupling of the models, so that the different types of participant nodes can train the different feature models based on the inter-feature constraint variable and local feature data. As model parameters are updated in a model training process, the different types of participant nodes calculate a gradient of the inter-feature constraint variable, and feed back the gradient to the central node, so that the central node can update the inter-feature constraint variable based on the gradients that are of the inter-feature constraint variable and that are fed back by the different types of participant nodes. This not only implements diversity of training data in federated learning, but also implements model training for different features. In this way, the performance of the trained model is improved.

The following describes, with reference to the accompanying drawings, a method for training an intelligent model provided in embodiments of this application.

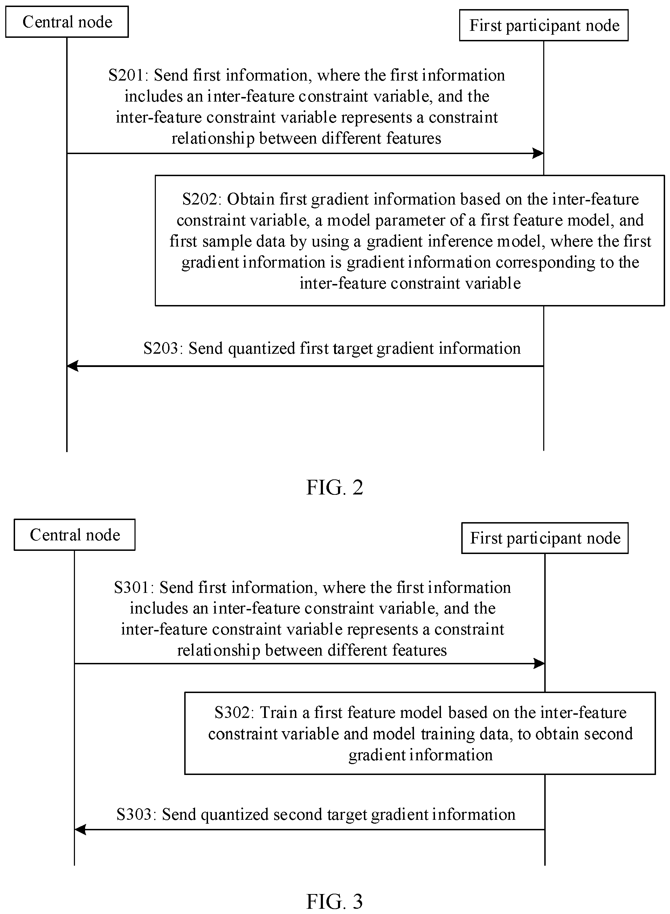

FIG. 2 is a schematic flowchart of a method for training an intelligent model according to an embodiment of this application. A central node and a plurality of participant node groups jointly perform training of the intelligent model. The intelligent model includes a plurality of feature models corresponding to a plurality of features of an inference target. A participant node in one of the participant node groups may collect training data corresponding to one feature, and train, based on the training data corresponding to the feature, a feature model corresponding to the feature. The method for training an intelligent model shown in FIG. 2 is performed by a first participant node in the plurality of participant node groups. The first participant node belongs to a first participant node group, and a model trained by a participant node in the first participant node group is a first feature model.

For example, the intelligent model jointly trained by the central node and the plurality of participant node groups includes M feature models, the M feature models are respectively trained by M participant node groups, and participant nodes in one of the participant node groups train one feature model. The first participant node group is an $m^{th}$ type of participant node group in the M participant node groups, or a participant node group corresponding to a feature model m. In other words, the first feature model is the feature model m, or is referred to as an $m^{th}$ type of feature model. The first participant node may be a $k^{th}$ participant node in the first participant node group. In other words, the first participant node may be referred to as the $k^{th}$ participant node in the $m^{th}$ type of participant node group.

FIG. 2 is a schematic flowchart of a method for training an intelligent model according to an embodiment of this application. The method includes but is not limited to the following steps.

S201: The central node sends first information to the first participant node, where the first information includes an inter-feature constraint variable, and the inter-feature constraint variable represents a constraint relationship between different features.

Correspondingly, the first participant node receives the first information from the central node, and determines the inter-feature constraint variable based on the first information.

By way of example and not limitation, the first information is broadcast information. Each participant node in a participant node group can receive the first information, and determine the inter-feature constraint variable based on the first information.

S202: The first participant node obtains first gradient information based on the inter-feature constraint variable, a model parameter of the first feature model, and first sample data by using a gradient inference model, where the first gradient information is gradient information corresponding to the inter-feature constraint variable.

The central node sends third information to the participant node in the first participant node group, where the third information indicates an updated model parameter of the first feature model. The updated model parameter is obtained by the central node based on model gradient information that is obtained through model training and that is fed back by the participant node in the first participant node group. The first participant node updates the parameter of the first feature model based on the model parameter information, to obtain the first feature model whose parameter is updated. The first participant node may train, by using the model training method provided in FIG. 3, the first feature model whose parameter is updated. For details, refer to the following descriptions of the embodiment shown in FIG. 3.

After receiving the inter-feature constraint variable, the participant node may infer, based on the inter-feature constraint variable, the model parameter of the feature model, and local sample data by using the gradient inference model, the gradient information corresponding to the inter-feature constraint variable. In this way, the central node can obtain the gradient information that corresponds to the inter-feature constraint variable and that is fed back by a participant node in one or more groups of participant node groups, and the central node can update the inter-feature constraint variable based on the obtained gradient information corresponding to the inter-feature constraint variable.

The model parameter of the first feature model may be an updated model parameter indicated by the third information that is most recently received from the central node.

In an implementation, after receiving the inter-feature constraint variable, each participant node participating in model training infers the gradient information corresponding to the inter-feature constraint variable, and the central node updates the inter-feature constraint variable based on the gradient information that corresponds to the inter-feature constraint variable and that is fed back by each participant node.

In another implementation, because participant nodes in a same group train a same model, after receiving the inter-feature constraint variable, some participant nodes participating in model training may infer the gradient information corresponding to the inter-feature constraint variable, and the central node updates the inter-feature constraint variable based on the gradient information that corresponds to the inter-feature constraint variable and that is fed back by the part of participant nodes.

The first participant node may determine, in the following manner, whether to infer, based on the inter-feature constraint variable, the model parameter of the first feature model, and the local sample data, the gradient information corresponding to the inter-feature constraint variable.

Manner 1: The central node triggers a part or all of participant nodes in the plurality of participant node groups to infer (or calculate) the gradient information of the inter-feature constraint variable based on the inter-feature constraint variable, the model parameters, and the local sample data of the participant nodes.

In other words, the central node may select a part of all of the participant nodes participating in model training to infer the gradient information corresponding to the inter-feature constraint variable. Because feature models trained by participant nodes in a same participant node group are the same, the central node may select one or more participant nodes in each participant node group to infer the gradient information corresponding to the inter-feature constraint variable. However, this application is not limited thereto. Alternatively, the central node may select, based on a relationship between different features, one or more participant nodes in some participant node groups to infer the gradient information corresponding to the inter-feature constraint variable.

In an example, the central node may send a first identifier set, where the first identifier set includes an identifier of sample data of the inter-feature constraint variable selected by the central node.

After receiving the first identifier set, the first participant node determines, based on whether a sample data set of the first participant node includes sample data corresponding to an identifier in the first identifier set, whether to infer the gradient information corresponding to the inter-feature constraint variable.

If the sample data set of the first participant node includes the sample data corresponding to the identifier in the first identifier set, for example, the sample data set of the first participant node includes the first sample data corresponding to a first identifier in the first identifier set, the first participant node infers, based on the inter-feature constraint variable, the model parameter of the first feature model, and the first sample data, the gradient information corresponding to the inter-feature constraint variable.

If the sample data set of the first participant node does not include the sample data corresponding to the identifier in the first identifier set, the first participant node does not infer the gradient information corresponding to the inter-feature constraint variable.

The other participant nodes determine, in a same manner, whether to infer the gradient information corresponding to the inter-feature constraint variable.

In another example, the central node may send inference indication information to the participant nodes, to indicate a part or all of the participant nodes to infer the gradient information corresponding to the inter-feature constraint variable.

For example, the central node may send the inference indication information to a participant node that needs to infer the gradient information corresponding to the inter-feature constraint variable, and the participant node that receives the inference indication information infers the gradient information corresponding to the inter-feature constraint variable.

For another example, the central node may broadcast the inference indication information, where the inference indication information includes identifiers of one or more participant nodes, and a participant node corresponding to the identifier included in the inference indication information infers the gradient information corresponding to the inter-feature constraint variable.

Manner 2: A same sample data selector is configured for the central node and the participant node, and the central node and the participant node may determine, based on the sample data selector, a participant node that infers the gradient information corresponding to the inter-feature constraint variable.

For example, the sample data selector may generate at least one identifier of sample data, where the sample data corresponding to the at least one identifier is used to infer the gradient information corresponding to the inter-feature constraint in a current round. If the sample data set of the first participant node includes sample data corresponding to an identifier in the at least one identifier (for example, the first sample data corresponding to the first identifier), the first participant node infers the gradient information corresponding to the inter-feature constraint variable. If the sample data set of the first participant node does not include the sample data corresponding to the identifier in the at least one identifier, the first participant node does not infer the gradient information corresponding to the inter-feature constraint variable. The other participant nodes determine, in a same manner, whether to infer the gradient information corresponding to the inter-feature constraint variable.

If the first participant node determines to infer the gradient information corresponding to the inter-feature constraint variable, the first participant node infers, based on the inter-feature constraint variable, the model parameter of the first feature model, and the first sample data, the gradient information corresponding to the inter-feature constraint variable.

For example, if a sample data identifier set used to infer the gradient information corresponding to the inter-feature constraint variable in a current round (for example, in a $t^{th}$ time of inference) is $I^t$, and an identifier i of the first sample data of the first participant node belongs to $I^t$, that is, i ∈ $I^t$, the first participant node infers, based on the inter-feature constraint variable $\lambda_i^t$ corresponding to the first sample data (that is, sample data i), the model parameter $\theta_m^t$ of the first feature model, and the first sample data by using the gradient inference model, the gradient information corresponding to the inter-feature constraint variable $\lambda_i^t$, to obtain the first gradient information $g_\lambda^t(i,m)$.

$$g_\lambda^t(i,m) = \frac{1}{N} \nabla_{\lambda_i} f(\theta_m^t, b^t, z_i^t, \lambda_i^t)$$

$g_\lambda^t(i,m)$ represents the gradient information that is of the inter-feature constraint variable $\lambda_i^t$ and that is obtained by a participant node that trains the feature model m (that is, the first feature model) through inference based on the sample data (that is, the first sample data) corresponding to the identifier i in the t$^{th}$ time of inference. $\theta_m^t$ is the updated model parameter obtained by the first participant node from the central node, $b^t$ is an offset parameter of a t$^{th}$ time of training, and $z_i^t$ is an auxiliary variable corresponding to an i$^{th}$ piece of training data in the t$^{th}$ time of training. The offset parameter $b^t$ and the auxiliary variable $z_i^t$ are from the central node. $\nabla_{\lambda_i} f(\cdot)$ is a function used to calculate the gradient information corresponding to the model parameter.

After obtaining the gradient information corresponding to the inter-feature constraint variable, the first participant node may send quantized first target gradient information to the central node. The quantized first target gradient information may be denoted as $\bar{g}_\lambda^t(i,m)$.

In an implementation, the first target gradient information is the foregoing first gradient information.

After the first participant node obtains the first gradient information, the first participant node performs quantization encoding on the first gradient information, to obtain the quantized first gradient information $\bar{g}_\lambda^t(i,m)$, and the first participant node sends the quantized first gradient information to the central node, so that the central node obtains an updated inter-feature constraint variable $\lambda^{t+1}$ based on the gradient information that corresponds to the inter-feature constraint variable and that is fed back by the participant node.

In another implementation, the first target gradient information includes the first gradient information and first residual gradient information, and the first residual gradient information represents a residual amount that is of gradient information corresponding to the inter-feature constraint variable and that is not sent to the central node before the first participant nodes obtains the first gradient information.

The first target gradient information $\tilde{g}_\lambda^t(i,m)$ may be represented as:

$$\tilde{g}_\lambda^t(i,m) = g_\lambda^t(i,m) + \beta^t r_\lambda^t(i,m)$$

where $\beta^t = \tau^{t-1}/\tau^t$, $\tau^t$ is a model parameter update step in the t$^{th}$ time of model training, that is, a learning rate of the t$^{th}$ time of model training, $\tau^{t-1}$ is a model parameter update step in a (t-1)$^{th}$ time of model training, that is, a learning rate of the (t-1)$^{th}$ time of model training, and $r_\lambda^t(i,m)$ is the first residual gradient information, that is, the residual amount that is in the gradient information corresponding to the inter-feature constraint variable and that is not sent to the central node before the gradient information corresponding to the inter-feature constraint variable is inferred for the t$^{th}$ time.

The first participant node sends the quantized first target gradient information to the central node, and the first participant node may update the residual gradient information. To be specific, the first participant node obtains second residual gradient information based on the first target gradient information $\tilde{g}_\lambda^t(i,m)$ and the quantized first target

gradient information $\bar{g}_\lambda^t(i,m)$, where the second residual gradient information is a residual amount $r_\lambda^{t+1}(i,m)$ that is of the gradient information and that is not sent to the central node before the first participant node infers the gradient information corresponding to the inter-feature constraint variable for a (t+1)$^{th}$ time.

$$r_\lambda^{t+1}(i,m) = \tilde{g}_\lambda^t(i,m) - \bar{g}_\lambda^t(i,m)$$

The second residual gradient information represents the residual amount that is in the first target gradient information and that is not sent to the central node. The second residual gradient information is used as the residual amount that is of the gradient information corresponding to the inter-feature constraint variable and that is not sent to the central node before a (t+1)$^{th}$ time of model training. In other words, the first participant node sends the quantized first target gradient information to the central node, and the residual amount of the gradient information is updated to the residual amount that is in the first target gradient information and that is not sent to the central node due to quantization encoding.

Optionally, the first participant node may determine, based on a scheduling policy, whether to send the quantized target gradient information to the central node.

For example, the first participant node sends the quantized first target gradient information to the central node based on the scheduling policy. After determining to send the quantized target gradient information to the central node, the first participant node sends the quantized first target gradient information $\bar{g}_\theta^t(m,k)$ to the central node.

Optionally, if the first participant node determines, based on the scheduling policy, not to send the quantized target gradient information to the central node, the first participant node determines the third residual gradient information. The third residual gradient information is the first target gradient information. In this case, the third residual gradient information is the residual amount $r_\lambda^{t+1}(i,m)$ that is of the gradient information and that is not sent to the central node before the first participant node performs the (t+1)$^{th}$ time of model training to obtain the gradient information:

$$r_\lambda^{t+1}(i,m) = \tilde{g}_\lambda^t(i,m)$$

In other words, if the first participant node determines, based on the scheduling policy, not to send the first target gradient information to the central node, the residual amount $r_\lambda^{t+1}(i,m)$ of the gradient information includes the first gradient information $g_\lambda^t(i,m)$ obtained through the t$^{th}$ time of inference and the residual amount $\beta^t r_\lambda^t(i,m)$ that is in the gradient information, corresponding to the inter-feature constraint variable, obtained before the t$^{th}$ time of inference and that is not sent to the central node.

In an example, the scheduling policy may be notified by the central node to the first participant node.

For example, the central node sends indication information A to the first participant node, where the indication information A may indicate the first participant node to send, to the central node after the t$^{th}$ time of inference of the gradient information corresponding to the inter-feature constraint variable, gradient information obtained through training. In this case, the first participant node sends, to the central node after the t$^{th}$ time of inference, the quantized first target gradient information, and calculates the residual amount (that is, the second residual gradient information) of the gradient information after the quantized first target gradient information is sent, where $r_\lambda^{t+1}(i,m)$ is the second residual gradient information.

Alternatively, the indication information A may indicate the first participant node not to send the obtained gradient information to the central node after the t$^{th}$ time of model inference. In this case, the first participant node does not send the gradient information to the central node after obtaining the first gradient information through the t$^{th}$ time of inference, and accumulates the first gradient information to the residual gradient information to obtain the third residual gradient information, where $r_\lambda^{t+1}(i,m)$ is the third residual gradient information.

In another example, the scheduling policy may be determined by the first participant node based on quantization noise information, channel resource information, and the first target gradient information.

A specific implementation in which the first participant node determines the scheduling policy based on the quantization noise information, the channel resource information, and target gradient information (for example, the first target gradient information in this example) is described in detail in Embodiment 2.

If the first participant node does not include the sample data corresponding to the identifier in the sample data identifier set $I^t$, the first participant node does not infer the gradient information of the inter-feature constraint variable.

The first participant node updates the residual gradient information, to obtain $r_\lambda^{t+1}(i, m)$:

$$r_\lambda^{t+1}(i, m) = \beta^t r_\lambda^t(i, m)$$

S203: The central node receives the target gradient information that corresponds to the inter-feature constraint variable and that is from a plurality of participant nodes.

Using the first participant node in the plurality of participant nodes as an example, the first participant node may send the quantized first target gradient information obtained through inference to the central node. After receiving the quantized first target gradient information from the first participant node, the central node obtains the first target gradient information through quantization decoding. The central node updates, based on the received target gradient information that corresponds to the inter-feature constraint variable and that is respectively fed back by the plurality of participant nodes, the inter-feature constraint variable corresponding to each piece of sample data.

$$\lambda_i^{t+1} = \begin{cases} \lambda_i^t + \tau^t \dfrac{N}{N_b} \left( \dfrac{1}{M} \sum_{m \in \mathcal{M}} \bar{g}_\lambda^t(i, m) \right), & i \in I^t \\ \lambda_i^t, & i \notin I^t \end{cases}$$

$N^b$ is a quantity of pieces of the sample data, and the central node may select $N^b$ pieces of sample data each time. A participant node that stores the selected sample data infers, based on the model parameter of the current feature model and the sample data, the gradient information of the inter-feature constraint variable, and feeds back the gradient information to the central node. Compared with a manner in which each participant node participates in feeding back the gradient information of the inter-feature constraint variable, resource overheads and implementation complexity can be reduced.

The central node further updates an offset parameter $b^{t+1}$ based on the inter-feature constraint variable obtained through calculation in each round:

$$b^{t+1} = b^t - \eta^t g_b^t$$

where $g_b^t = \nabla r(b^t) + \dfrac{1}{N_b} \sum_{i \in I^t} \lambda_i^t$. $r(\cdot)$ is a block-separable (block-separable) regularization function.

In addition, the central node further updates an auxiliary variable $z_i^{t+1}$ based on the inter-feature constraint variable obtained through update in each round:

$$z_i^{t+1} = \begin{cases} z_i^t - \eta^t g_b^t \dfrac{N}{N_b} g_{z_i}^t, & i \in I^t \\ z_i^t, & i \notin I^t \end{cases}$$

where $g_{z_i}^t = \dfrac{1}{N} (\nabla l_i(z_i^t) - \lambda_i^t)$, and $l_i(\cdot)$ is a sampling loss function of an $i^{th}$ data sample.

After obtaining the updated inter-feature constraint variable, the central node sends the updated offset parameter $b^{t+1}$, the auxiliary variable $z_i^{t+1}$, and the inter-feature constraint variable to the participant node, so that the participant node trains the feature model based on the offset parameter, the auxiliary variable, and the inter-feature constraint variable.

Based on the foregoing solution, as model parameters are updated in a model training process, different types of participant nodes calculate the gradient information corresponding to the inter-feature constraint variable, and feed back the gradient information to the central node. The central node updates, based on the gradient information that is of the inter-feature constraint variable and that is obtained through inference by participant nodes corresponding to different feature models, the inter-feature constraint variable that represents an association relationship between features, to implement inter-feature decoupling of the models. In this way, the different types of participant nodes can train different feature models based on the inter-feature constraint variable and local feature data, so that the central node can update the inter-feature constraint variable based on gradients that are of the inter-feature constraint variable and that are fed back by the different types of participant nodes. This implements diversity of training data and diversity of features of federated learning without a need to transmit raw data. To be specific, raw data leakage is avoided, and the performance of the trained model can be improved.

FIG. 3 is another schematic flowchart of a method for training an intelligent model according to an embodiment of this application. The method includes but is not limited to the following steps.

S301: A central node sends first information to a first participant node, where the first information includes an inter-feature constraint variable, and the inter-feature constraint variable represents a constraint relationship between different features.

Correspondingly, the first participant node receives the first information from the central node, and determines the inter-feature constraint variable based on the first information.

S302: The first participant node trains a first feature model based on the inter-feature constraint variable and model training data, to obtain second gradient information.

After obtaining the inter-feature constraint variable, the first participant node performs, based on the inter-feature constraint variable and the model training data, a t$^{th}$ time of model training on the first feature model.

The central node further sends third information to a participant node in the first participant node group, where the third information indicates an updated model parameter of the first feature model. The updated model parameter is obtained by the central node based on model gradient information that is obtained through a (t-1)$^{th}$ time of model training and that is fed back by the participant node in the first participant node group.

The first participant node updates the parameter of the first intelligent model based on the model parameter information, to obtain an updated first intelligent model. The first participant node then performs the t$^{th}$ time of model training, and trains, based on the inter-feature constraint variable and the model training data, the first intelligent model whose parameter is updated. The first participant node obtains the second gradient information after training the first feature model for the t$^{th}$ time.

For example, the second gradient information may be denoted as $g_\theta^t(m,k)$, and indicates gradient information obtained by a k$^{th}$ participant node (that is, the first participant node) in m types of participant node groups through the t$^{th}$ time of training. The second gradient information $g_\theta^t(m,k)$ may be represented as:

$$g_\theta^t(m,k) = \frac{1}{M} \sum_{i \in I_{m,k}^t} (\nabla_{\theta_m} f(\theta_m^t, b^t, z_i^t, \lambda_i^t))$$

where $I_{m,k}^t$ is an index value set that is of training data and that is selected by the first participant node in the t$^{th}$ time of training. $\theta_m^t$ is the updated model parameter obtained by the first participant node from the central node, $\lambda_i^t$ is the inter-feature constraint variable, $b^t$ is an offset parameter of the t$^{th}$ time of training, and $z_i^t$ is an auxiliary variable corresponding to an i$^{th}$ piece of training data in the t$^{th}$ time of training. The offset parameter $b^t$ and the auxiliary variable $z_i^t$ are obtained by the first participant node from the central node. $\nabla_{\theta_m} f(\cdot)$ is a function used to calculate gradient information corresponding to the model parameter. The second gradient information is used to update the model parameter of the first feature model. Specifically, the first participant node feeds back the gradient information to the central node, and the central node determines the updated model parameter based on the gradient information fed back by the participant node in the first participant node group.

After training the first feature model based on training data corresponding to each index value in the index value set of the training data, the first participant node obtains one piece of gradient information, and accumulates gradient information obtained by training the model based on each piece of training data. Because the first intelligent model is one of M feature models of the intelligent model, after the gradient information obtained through accumulation is divided by M, the second gradient information $g_\theta^t(m,k)$ obtained through the t$^{th}$ time of training of the first intelligent model by the first participant node is obtained. However, this application is not limited thereto.

After performing training on the first intelligent model for the t$^{th}$ time, the first participant node may send quantized second target gradient information to the central node. The quantized second target gradient information may be denoted as $\bar{g}_\theta^t(m,k)$.

In an implementation, the second target gradient information is the foregoing second gradient information.

The first participant node obtains the second gradient information after performing the t$^{th}$ time of model training on the first intelligent model, and the first participant node performs quantization encoding on the second gradient information, to obtain the quantized second gradient information $\bar{g}_\theta^t(m,k)$, and sends the quantized second gradient information to the central node. In this way, the central node obtains the updated parameter of the first feature model based on the gradient information that is obtained through the t$^{th}$ time of training and that is fed back by the participant node in the first participant node group.

In another implementation, the second target gradient information includes the second gradient information and fourth residual gradient information, and the fourth residual gradient information represents a residual amount that is of gradient information and that is not sent to the central node before the first participant node obtains the second gradient information.

The second target gradient information $\tilde{g}_\theta^t(m,k)$ may be represented as:

$$\tilde{g}_\theta^t(m,k) = g_\theta^t(m,k) + \alpha^t r_\theta^t(m,k)$$

where $\alpha^t = \eta^{t-1}/\eta^t$, $\eta^t$ is a model parameter update step in the t$^{th}$ time of model training, that is, a learning rate of the t$^{th}$ time of model training, $\eta^{t-1}$ is a model parameter update step in a (t-1)$^{th}$ time of model training, that is, a learning rate of the (t-1)$^{th}$ time of model training, and $r_\theta^t(m,k)$ is the fourth residual gradient information, that is, the residual amount of gradient information that is in the gradient information obtained through model training before the t$^{th}$ time of model training and that is not sent to the central node.

After the first participant node sends the quantized second target gradient information to the central node, the first participant node may update residual gradient information. To be specific, the first participant node obtains, based on the second target gradient information $\tilde{g}_\theta^t(m,k)$ and the quantized second target gradient information $\bar{g}_\theta^t(m,k)$, that fifth residual gradient information is a residual amount $r_\theta^{t+1}(m,k)$ that is of gradient information and that is not sent to the central node before the first participant node performs a (t+1)$^{th}$ time of model training to obtain gradient information.

$$r_\theta^{t+1}(m,k) = \tilde{g}_\theta^t(m,k) - \bar{g}_\theta^t(m,k)$$

The fifth residual gradient information represents the residual amount that is in the second target gradient information and that is not sent to the central node. The fifth residual gradient information is used as the residual amount of gradient information that is in the gradient information obtained through model training before the (t+1)$^{th}$ time of model training and that is not sent to the central node. In other words, the first participant node sends the quantized second target gradient information to the central node, and the residual amount of the gradient information is the residual amount that is in the second target gradient information and that is not sent to the central node due to quantization encoding.

Optionally, the first participant node may determine, based on a scheduling policy, whether to send the quantized target gradient information to the central node.

For example, the first participant node sends the quantized second target gradient information to the central node based on the scheduling policy. After determining to send the quantized target gradient information to the central node, the first participant node sends the quantized second target gradient information $\bar{g}_\theta^t(m,k)$ to the central node.

Optionally, if the first participant node determines, based on the scheduling policy, not to send the quantized target gradient information to the central node, the first participant node determines sixth residual gradient information. The sixth residual gradient information is the second target gradient information. In this case, the sixth residual gradient information is the residual amount $r_\theta^{t+1}(m,k)$ that is of the gradient information and that is not sent to the central node before the first participant node performs the (t+1)$^{th}$ time of model training to obtain the gradient information:

$$r_\theta^{t+1}(m,k)=\tilde{g}_\theta^t(m,k)$$

In other words, if the first participant node determines, based on the scheduling policy, not to send the second target gradient information to the central node, the residual amount $r_\theta^{t+1}(m,k)$ of the gradient information includes the second gradient information $g_\theta^t(m,k)$ obtained through the t$^{th}$ time of model training and the residual amount $\alpha^t r_\theta^t(m,k)$ that is not sent to the central node before the second gradient information is obtained through the t$^{th}$ time of model training.

In an example, the scheduling policy may be notified by the central node to the first participant node.

For example, the central node sends indication information A to the first participant node, where the indication information A may indicate the first participant node to send, to the central node after the t$^{th}$ time of model training, the gradient information obtained through training. In this case, the first participant node sends the quantized second target gradient information to the central node after the t$^{th}$ time of training, and calculates the residual amount (that is, the fifth residual gradient information) of the gradient information after the quantized second target gradient information is sent, where $r_\theta^{t+1}(m,k)$ is the fifth residual gradient information.

Alternatively, the indication information A may indicate the first participant node not to send, to the central node after the t$^{th}$ time of model training, the gradient information obtained through training. In this case, the first participant node does not send the gradient information to the central node after obtaining the second gradient information through the t$^{th}$ time of training, and accumulates the second gradient information to the residual gradient information to obtain the sixth residual gradient information, where $r_\theta^{t+1}(m,k)$ is the sixth residual gradient information.

In another example, the scheduling policy may be determined by the first participant node based on quantization noise information, channel resource information, and the second target gradient information.

A specific implementation in which the first participant node determines the scheduling policy based on the quantization noise information, the channel resource information, and the target gradient information is described in detail in Embodiment 2.

The central node receives quantized target gradient information that is sent after the participant node in the first participant node group performs the t$^{th}$ time of model training,

$$\theta_m^{t+1} = \theta_m^t - \eta^t\left(\frac{1}{N^b}\sum_{k\in\mathcal{K}_m}\bar{g}_\theta^t(m,k)\right)$$

where $\mathcal{K}_m$ = {1, ..., $K_m$}, and $N^b$ is a quantity of data samples.

**Embodiment 2**

This embodiment of this application provides a manner in which a participant node determines a scheduling policy based on channel resource information and a to-be-transmitted signal $\tilde{g}(m, k)$. The to-be-transmitted signal $\tilde{g}(m, k)$ may be the foregoing second target gradient information $\tilde{g}_\theta^t(m, k)$, and the scheduling policy is used by the first participant node to determine whether to send the second target gradient information to a central node. The to-be-transmitted signal $\tilde{g}(m, k)$ may be the foregoing first target gradient information $\tilde{g}_\lambda^t(m, k)$, and the scheduling policy is used by the first participant node to determine whether to send the first target gradient information to the central node. However, this application is not limited thereto, and the scheduling policy may also be used in a decision of whether to transmit another to-be-transmitted signal.

By way of example and not limitation, the channel resource information includes channel state information and/or transmission time information.

The channel state information is state information $h_k$ of a channel between the first participant node and the central node, and the transmission time information is duration $T_0$ in which the first participant node occupies a channel resource to transmit gradient information.

The first participant node may determine quantization noise information based on the channel resource information and target information, where the quantization noise information represents a loss introduced by quantization encoding and decoding on the target information. For example, the target information may be the foregoing first target gradient information $\tilde{g}_\lambda^t(m, k)$, or may be the foregoing second target gradient information $\tilde{g}_\theta^t(m, k)$. Alternatively, the target information may be other information. This is not limited in this application.

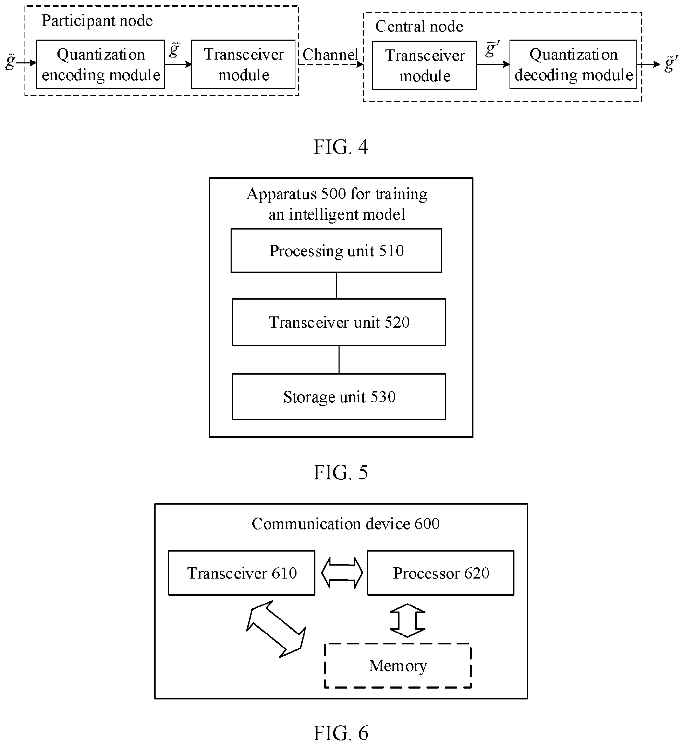

For example, as shown in FIG. 4, the first participant node performs quantization encoding on to-be-sent target information $\tilde{g}$ by using a quantization encoding module, to obtain quantized target information $\overline{g}$. The first participant node sends the quantized target information $\overline{g}$ to the central node by using a transceiver module of the first participant node. The quantized target information is received by the central node by using a transceiver module of the central node after channel propagation, and the quantized target information received by the central node may be denoted as $\overline{g}'$. The central node performs quantization decoding on $\overline{g}'$ by using a quantization decoder, to obtain recovered target information $\tilde{g}'$. A loss introduced by the recovered $\tilde{g}'$ relative to $\tilde{g}$ is the quantization noise.

In an example, the first participant node may perform quantization encoding on the target information and then perform quantization decoding on the target information, to obtain quantization noise information, where the quantization noise information is a difference between the target information and a signal obtained through encoding and then decoding on the target information.

In another example, the first participant node may estimate the quantization noise information of the target information based on the channel resource information and the target information.

In other words, the first participant node may estimate, based on the obtained channel resource information, the loss of the target information after the quantized target information undergoes channel transmission and quantization decoding that is performed by the central node, to obtain the quantization noise information. Optionally, the channel resource information may include the channel state information and/or channel occupation time information (that is, the transmission time information).

Optionally, the first participant node obtains the quantization noise information of the target information based on the channel resource information, communication cost information, and the target information. The communication cost information indicates a communication cost weight of a communication resource, and the communication resource may include transmission power and/or transmission bandwidth.

Optionally, the central node may send second information to the first participant node, where the second information indicates the communication cost information. Correspondingly, the first participant node receives the second information from the central node, and determines the communication cost information based on the second information.

For example, the communication cost information may indicate a cost weight $\gamma_p$ of the transmission power and a cost weight $\gamma_B$ of the transmission bandwidth. The first participant node obtains the transmission communication cost information based on the second information from the central node, and may obtain a parameter $q_k$ through calculation based on the transmission power cost weight $\gamma_p$, the channel resource information, that is, the channel state information $h_k$ and the transmission time information $T_0$, and a noise power spectrum density $N_0$. The parameter $q_k$ meets:

$$q_k = \frac{T_0|h_k|^2}{N_0\gamma_p}$$

The first participant node may further solve the following formula to obtain a parameter $u_k^*$ :

$$u_k^* T_0 \log(u_k^* q_k) - u_k^* T_0 + \frac{T_0}{q_k} - \gamma_B = 0$$

The first participant node obtains the quantization noise information based on the parameter $u_k^*$ and the target information $\tilde{g}(m, k)$, where the quantization noise information is a covariance matrix of the quantization noise of the target information.

$$Q_k^* = \frac{1}{2}((V_k^2 + 2u_k^* V_k)^{\frac{1}{2}} - V_k)$$

where $V_k$ is the covariance matrix of the target information $\tilde{g}(m, k)$.

The first participant node may determine the transmission bandwidth $B_k^*$ based on the quantization noise information, the communication cost information, the channel resource information, and the target information, where $B_k^*$ meets:

$$B_k^* = \frac{\log\det(I + V_k(Q_k^*)^{-1})}{2T_0\log(u_k^* q_k)}$$

where I is an identity matrix, det(A) represents a determinant of a matrix A, and log(x) represents calculating a logarithm of x.

In addition, the first participant node may determine the transmission power $p_k^*$ based on the quantization noise information, the communication cost information, the channel resource information, and the target information, where $p_k^*$ meets:

$$p_k^* = \frac{(u_k^* q_k - 1)\log\det(I + V_k(Q_k^*)^{-1})}{2\gamma_p q_k \log(u_k^* q_k)}$$

After obtaining the transmission bandwidth $B_k^*$ and the transmission power $p_k^*$, the first participant node may determine a threshold $f_k^*$ based on the transmission bandwidth $B_k^*$, the transmission power $p_k^*$, the quantization noise information $Q_k^*$ of the target information, and the communication cost, where the threshold $f_k^*$ meets:

$$f_k^* = tr(Q_k^*) + \gamma_p p_k^* + \gamma_B B_k^*$$

where tr(A) represents a trace of the matrix A. In linear algebra, a sum of elements on a main diagonal (a diagonal from upper left corner to lower right) of an n×n matrix A is referred to as a trace (or a trace) of the matrix A, and is generally denoted as tr(A).

The first participant node may compare a metric value of the target information $\tilde{g}(m, k)$ with the threshold, and determine whether to send the quantized target information to the central node.

By way of example and not limitation, the metric value of the target information may be a norm $\| \tilde{g}(m, k) \|_2$ of the target information.

If the target information is a vector, the norm $\| \tilde{g}(m, k) \|_2$ of the target information is an $l_2$ norm of the target information; or if the target information is a matrix, the norm $\| \tilde{g}(m, k) \|_2$ of the target information is a Frobeius norm of the target information.

When the metric value of the target information is greater than the threshold $f_k^*$, for example, $\| \tilde{g}_k \|_2^2 > f_k^*$, the first participant node sends the quantized target information to the central node, that is, the first participant node is in an active state; and otherwise, when the metric value of the target information is less than or equal to the threshold $f_k^*$, for example, $\| \tilde{g}_k \|_2^2 \leq f_k^*$, the first participant node does not send the target information to the central node, that is, the first participant node is in an inactive state.

Based on the foregoing solution, the participant node determines, based on the to-be-transmitted target information and the communication cost information that is broadcast by the central node by considering the loss introduced by the quantization encoding and decoding on the target information, whether to send the target information to the central node, to implement adaptive scheduling of a channel environment by the participant node, thereby improving reliability of target signal transmission and channel resource utilization.

In the embodiments shown in FIG. 2 and FIG. 3, the participant node may determine, based on the scheduling policy provided in Embodiment 2, whether to send the quantized target information to the central node.

For example, in the example shown in FIG. 2, the first participant node determines the first threshold based on the first quantization noise information and the channel resource information, where the first quantization noise information represents the loss introduced by the quantization encoding and decoding on the first target gradient information For example, with reference to the foregoing descriptions, the first participant node may obtain the first quantization noise information based on the parameter $u_k^*$ and the first target information $\tilde{g}_\lambda^t(i, m)$. If the metric value of the first target gradient information is greater than the first threshold, the first participant node sends the quantized first target gradient information to the central node; or if the metric value of the first target gradient information is less than or equal to the first threshold, the first participant node does not send the quantized first target gradient information to the central node.

For another example, in the example shown in FIG. 3, the first participant node determines the second threshold based on the second quantization noise information and the channel resource information, where the second quantization noise information represents the loss introduced by the quantization encoding and decoding on the second target gradient information. For example, with reference to the foregoing descriptions, the first participant node may obtain the second quantization noise information based on the parameter $u_k^*$ and the second target information *ge (m, k)*. If the metric value of the second target gradient information is greater than the second threshold, the first participant node sends the quantized second target gradient information to the central node; or if the metric value of the second target gradient information is less than or equal to the second threshold, the first participant node does not send the quantized second target gradient information to the central node.

In the examples of this application, unless otherwise stated or there is a logic conflict, terms and/or descriptions in different examples are consistent and may be mutually referenced, and technical features in different examples may be combined based on an internal logical relationship thereof, to form a new example.

In this application, a node involved may perform some or all steps or operations related to the node. These steps or operations are merely examples. In this application, other operations or variants of various operations may be further performed. In addition, the steps may be performed in a sequence different from a sequence presented in this application, and it is possible that not all the operations in this application need to be performed.

The methods provided in embodiments of this application are described above in detail with reference to FIG. 2 to FIG. 4. The following describes in detail apparatuses provided in embodiments of this application. To implement the functions in the foregoing methods provided in embodiments of this application, each network element may include a hardware structure and/or a software module, and implement the foregoing functions in a form of the hardware structure, the software module, or a combination of the hardware structure and the software module. Whether a function in the foregoing functions is performed in the manner of the hardware structure, the software module, or the combination of the hardware structure and the software module depends on particular applications and design constraint conditions of the technical solutions.

FIG. 5 is a block diagram of an apparatus for training an intelligent model according to an embodiment of this application. As shown in FIG. 5, the apparatus 500 for training an intelligent model may include a processing unit 510 and a transceiver unit 520.

In a possible design, the apparatus 500 for training an intelligent model may correspond to the participant node in the foregoing method embodiments, or may be configured on (or used in) a chip in the participant node, or may be another apparatus, module, circuit, unit, or the like that can implement a method performed by the participant node.

It should be understood that, the apparatus 500 for training an intelligent model may correspond to the participant node in the methods in embodiments of this application, and the apparatus 500 for training an intelligent model may include units in a first device configured to perform the methods shown in FIG. 2 and FIG. 3. In addition, the units in the apparatus 500 for training an intelligent model and the foregoing other operations and/or functions are respectively used to implement corresponding procedures of the methods shown in FIG. 2 and FIG. 3.

When the apparatus 500 for training an intelligent model is configured to implement the corresponding procedures performed by the participant node in the foregoing method embodiments, the transceiver unit 520 is configured to receive first information from the central node, where the first information indicates an inter-feature constraint variable, and the inter-feature constraint variable represents a constraint relationship between different features. The processing unit 510 is configured to obtain first gradient information based on the inter-feature constraint variable, a model parameter of the first feature model, and first sample data by using a gradient inference model, where the first gradient information is gradient information corresponding to the inter-feature constraint variable. The processing unit 510 is further configured to send the first gradient information to the central node.

Optionally, the processing unit 510 is further configured to determine a threshold based on quantization noise information and channel resource information, where the quantization noise information represents a loss introduced by quantization encoding and decoding on target information. The transceiver unit 520 is further configured to: if a metric value of the target information is greater than the threshold, send quantized target information; or if the metric value of the target information is less than or equal to the threshold, skip sending the quantized target information.

It should be further understood that, when the apparatus 500 for training an intelligent model is the chip configured on (or used in) the participant node, the transceiver unit 520 in the apparatus 500 for training an intelligent model may be an input/output interface or a circuit of the chip, and the processing unit 510 of the apparatus 500 for training an intelligent model may be a logic circuit in the chip.

In another possible design, the apparatus 500 for training an intelligent model may correspond to the central node in the foregoing method embodiments, for example, a chip configured on (or used in) the central node, or another apparatus, module, circuit, or unit that can implement a method performed by the central node.

It should be understood that, the apparatus 500 for training an intelligent model may correspond to the central node in the methods shown in FIG. 2 and FIG. 3, and the apparatus 500 for training an intelligent model may include units of the central node configured to perform the methods shown in FIG. 2 and FIG. 3. In addition, the units in the apparatus 500 for training an intelligent model and the foregoing other operations and/or functions are respectively used to implement corresponding procedures of the methods shown in FIG. 2 and FIG. 3.

When the apparatus 500 for training an intelligent model is configured to implement the corresponding procedures performed by the central node in the foregoing method embodiments, the processing unit 510 is configured to determine an inter-feature constraint variable, where the inter-feature constraint variable represents a constraint relationship between different features; and the transceiver unit 520 is configured to send first information to a participant node in the plurality of participant node groups, where the first information includes the inter-feature constraint variable.

Optionally, the processing unit 510 is further configured to determine a threshold based on quantization noise information and channel resource information, where the quantization noise information represents a loss introduced by quantization encoding and decoding on target information. The transceiver unit 520 is further configured to: if a metric value of the target information is greater than the threshold, send quantized target information; or if the metric value of the target information is less than or equal to the threshold, skip sending the quantized target information.

It should be further understood that, when the apparatus 500 for training an intelligent model is the chip configured on (or used in) the central node, the transceiver unit 520 in the apparatus 500 for training an intelligent model may be an input/output interface or a circuit of the chip, and the processing unit 510 of the apparatus 500 for training an intelligent model may be a logic circuit in the chip. Optionally, the apparatus 500 for training an intelligent model may further include a storage unit 530. The storage unit 530 may be configured to store instructions or data. The processing unit 510 may execute the instructions or the data stored in the storage unit, so that the apparatus for training an intelligent model implements a corresponding operation.

It should be understood that, the transceiver unit 520 in the apparatus 500 for training an intelligent model may be implemented by using a communication interface (for example, a transceiver or an input/output interface), for example, may correspond to a transceiver 610 in a communication device 600 shown in FIG. 6. The processing unit 510 in the apparatus 500 for training an intelligent model may be implemented by using at least one processor, for example, may correspond to a processor 620 in the communication device 600 shown in FIG. 6. The processing unit 510 in the apparatus 500 for training an intelligent model may be further implemented by using at least one logic circuit. The storage unit 530 in the apparatus 500 for training an intelligent model may correspond to a memory in the communication device 600 shown in FIG. 6.

It should be further understood that, a specific process in which the units perform the foregoing corresponding steps is described in detail in the foregoing method embodiments, and for brevity, details are not described herein again.

FIG. 6 is a diagram of a structure of a terminal device 600 according to an embodiment of this application.

The communication device 600 may correspond to the participant node in the foregoing method embodiments. As shown in FIG. 6, the participant node 600 includes a processor 620 and a transceiver 610. Optionally, the participant node 600 further includes a memory. The processor 620, the transceiver 610, and the memory may communicate with each other through an internal connection path, to transmit a control signal and/or a data signal. The memory is configured to store a computer program, and the processor 620 is configured to execute the computer program in the memory, to control the transceiver 610 to receive and send a signal.

It should be understood that, the communication device 600 shown in FIG. 6 can implement the processes related to the participant node in the method embodiments shown in FIG. 2 and FIG. 3. The operations and/or the functions of the modules in the participant node 600 are respectively used for implementing the corresponding procedures in the foregoing method embodiments. For details, refer to the descriptions in the foregoing method embodiments. To avoid repetition, detailed descriptions are appropriately omitted herein.

The communication device 600 may be corresponding to the central node in the foregoing method embodiment. As shown in FIG. 6, the central node 600 includes a processor 620 and a transceiver 610. Optionally, the central node 600 further includes a memory. The processor 620, the transceiver 610, and the memory may communicate with each other through an internal connection path, to transmit a control signal and/or a data signal. The memory is configured to store a computer program, and the processor 620 is configured to execute the computer program in the memory, to control the transceiver 610 to receive and send a signal.

It should be understood that, the communication device 600 shown in FIG. 6 can implement the processes related to the central node in the method embodiments shown in FIG. 2 and FIG. 3. The operations and/or the functions of the modules in the central node 600 are respectively used for implementing the corresponding procedures in the foregoing method embodiments. For details, refer to the descriptions in the foregoing method embodiments. To avoid repetition, detailed descriptions are appropriately omitted herein.

The processor 620 and the memory may be integrated into one processing apparatus. The processor 620 is configured to execute program code stored in the memory to implement the foregoing functions. During specific implementation, the memory may alternatively be integrated into the processor 620, or may be independent of the processor 620. The processor 620 may correspond to the processing unit in FIG. 5.

The transceiver 610 may correspond to the transceiver unit in FIG. 5. The transceiver 610 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the communication device 600 shown in FIG. 6 can implement the processes related to the terminal device in the method embodiments shown in FIG. 2 and FIG. 3. The operations and/or the functions of the modules in the terminal device 600 are respectively used for implementing the corresponding procedures in the foregoing method embodiments. For details, refer to the descriptions in the foregoing method embodiments. To avoid repetition, detailed descriptions are appropriately omitted herein.

An embodiment of this application further provides a processing apparatus, including a processor and a (communication) interface. The processor is configured to perform the method in any one of the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

Based on the methods provided in embodiments of this application, this application further provides a computer program product. The computer program product includes computer program code. When the computer program code is executed by one or more processors, an apparatus including the processor is enabled to perform the methods in the embodiments shown in FIG. 2 and FIG. 3.

All or some of the technical solutions provided in embodiments of this application may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, a terminal device, a core network device, a machine learning device, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a data subscriber line (digital subscriber line, DSL)) or wireless (for example, infrared, wireless, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

Based on the methods provided in embodiments of this application, this application further provides a computer-readable storage medium. The computer-readable storage medium stores program code. When the program code is run by one or more processors, an apparatus including the processor is enabled to perform the methods in the embodiments shown in FIG. 2 and FIG. 3.

Based on the methods provided in embodiments of this application, this application further provides a system, including the foregoing one or more first devices. The system may further include the foregoing one or more second devices.

Optionally, the first device may be a network device or a terminal device, and the second device may be a device that communicates with the first device through a radio link.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A method for training an intelligent model, wherein a central node and a plurality of participant node groups jointly perform training of the intelligent model, the intelligent model consists of a plurality of feature models corresponding to a plurality of features of an inference target, participant nodes in one of the participant node groups train one of the feature models, and the training method is performed by a first participant node that trains a first feature model and that is in the plurality of participant node groups, and the method comprises:

    receiving first information from the central node, wherein the first information indicates an inter-feature constraint variable, and the inter-feature constraint variable represents a constraint relationship between different features;
    obtaining first gradient information based on the inter-feature constraint variable, a model parameter of the first feature model, and first sample data by using a gradient inference model, wherein the first gradient information is gradient information corresponding to the inter-feature constraint variable; and
    sending the first gradient information to the central node.

2.  The method according to claim 1, wherein the method further comprises:

    receiving a first identifier set from the central node, wherein the first identifier set comprises an identifier of sample data of the inter-feature constraint variable selected by the central node; and
    the obtaining first gradient information based on the inter-feature constraint variable, a model parameter of the first feature model, and first sample data by using a gradient inference model, wherein the first gradient information is gradient information corresponding to the inter-feature constraint variable comprises:

determining that a sample data set of the first participant node comprises the first sample data corresponding to a first identifier, wherein the first identifier belongs to the first identifier set; and

obtaining the first gradient information based on the inter-feature constraint variable, the model parameter of the first feature model, and the first sample data by using the gradient inference model, wherein the first gradient information is the gradient information corresponding to the inter-feature constraint variable.

3. The method according to claim 1 or 2, wherein the sending the first gradient information to the central node comprises: sending quantized first target gradient information to the central node, wherein the first target gradient information comprises the first gradient information, or the first target gradient information comprises the first gradient information and first residual gradient information, and the first residual gradient information represents a residual amount that is of gradient information corresponding to the inter-feature constraint variable and that is not sent to the central node before the first gradient information is obtained.

4. The method according to claim 3, wherein the method further comprises: obtaining second residual gradient information based on the first target gradient information and the quantized first target gradient information, wherein the second residual gradient information is a residual amount that is in the first target gradient information and that is not sent to the central node.

5. The method according to claim 3 or 4, wherein the method further comprises:

   determining a first threshold based on first quantization noise information and channel resource information, wherein the first quantization noise information represents a loss introduced by quantization encoding and decoding on the first target gradient information; and
   the sending quantized first target gradient information to the central node comprises:

   determining that a metric value of the first target gradient information is greater than the first threshold; and
   sending the quantized first target gradient information to the central node.

6. The method according to claim 5, wherein the method further comprises: if the metric value of the first target gradient information is less than or equal to the first threshold, determining not to send the quantized first target gradient information to the central node.

7. The method according to claim 6, wherein the method further comprises: if the metric value of the first target gradient information is less than the first threshold, determining third residual gradient information, wherein the third residual gradient information is the first target gradient information.

8. The method according to any one of claims 5 to 7, wherein the method further comprises: obtaining the first quantization noise information based on the channel resource information, communication cost information, and the first target gradient information, wherein the communication cost information indicates a communication cost weight of a communication resource, and the communication resource comprises transmission power and/or transmission bandwidth.

9. The method according to any one of claims 5 to 8, wherein the determining a first threshold based on first quantization noise information and channel resource information comprises:

   determining the transmission bandwidth and/or the transmission power based on the first quantization noise information, the communication cost information, the channel resource information, and the first target gradient information, wherein the communication cost information indicates the communication cost weight of the communication resource, and the communication resource comprises the transmission power and/or the transmission bandwidth; and
   determining the first threshold based on the first quantization noise information and the communication resource.

10. The method according to claim 8 or 9, wherein the method further comprises: receiving second information from the central node, wherein the second information indicates the communication cost information.

11. The method according to any one of claims 1 to 10, wherein the method further comprises:

training the first feature model based on the inter-feature constraint variable and model training data, to obtain second gradient information; and

sending the second gradient information to the central node.

12. The method according to claim 11, wherein the sending the second gradient information to the central node comprises:

sending quantized second target gradient information to the central node, wherein the second target gradient information comprises the second gradient information, or the second target gradient information comprises the second gradient information and fourth residual gradient information, and the fourth residual gradient information represents a residual amount that is of gradient information and that is not sent to the central node before the second gradient information is obtained.

13. The method according to claim 12, wherein the method further comprises:

obtaining fifth residual gradient information based on the second target gradient information and the quantized second target gradient information, wherein the fifth residual gradient information represents a residual amount that is in the second target gradient information and that is not sent to the central node.

14. The method according to claim 12 or 13, wherein the method further comprises:

determining a second threshold based on second quantization noise information and the channel resource information, wherein the second quantization noise information represents a loss introduced by quantization encoding and decoding on the second target gradient information; and

the sending quantized second target gradient information to the central node comprises:

determining that a metric value of the second target gradient information is greater than the second threshold; and

sending the quantized second target gradient information to the central node.

15. The method according to claim 14, wherein the method further comprises:

if the metric value of the second target gradient information is less than or equal to the second threshold, determining not to send the quantized second target gradient information to the central node.

16. The method according to claim 15, wherein the method further comprises:

if the metric value of the second target gradient information is less than the second threshold, determining sixth residual gradient information, wherein the sixth residual gradient information is the second target gradient information.

17. The method according to any one of claims 14 to 16, wherein the method further comprises:

obtaining the second quantization noise information based on the channel resource information, the communication cost information, and the second target gradient information, wherein the communication cost information indicates the communication cost weight of the communication resource, and the communication resource comprises the transmission power and/or the transmission bandwidth.

18. The method according to any one of claims 14 to 17, wherein the determining a second threshold based on second quantization noise information and the channel resource information comprises:

determining the transmission bandwidth and/or the transmission power based on the second quantization noise information, the communication cost information, the channel resource information, and the second target gradient information, wherein the communication cost information indicates the communication cost weight of the communication resource, and the communication resource comprises the transmission power and/or the transmission bandwidth; and

determining the second threshold based on the second quantization noise information and the communication resource.

19. The method according to any one of claims 1 to 18, wherein the method further comprises:

receiving third information from the central node, wherein the third information indicates an updated parameter of the first feature model; and

updating the parameter of the first feature model based on the third information.

**20.** A method for training an intelligent model, wherein a central node and a plurality of participant node groups jointly perform training of the intelligent model, the intelligent model consists of a plurality of feature models corresponding to a plurality of features of an inference target, participant nodes in one of the participant node groups train one of the feature models, and the training method is performed by the central node, and comprises:

determining an inter-feature constraint variable, wherein the inter-feature constraint variable represents a constraint relationship between different features; and
sending first information to a participant node in the plurality of participant node groups, wherein the first information comprises the inter-feature constraint variable.

**21.** The method according to claim 20, wherein the method further comprises:

receiving at least one piece of second target gradient information from a participant node in a first participant node group, wherein the plurality of participant node groups comprise the first participant node group;
determining an updated model parameter of a first feature model based on the at least one piece of second target gradient information, wherein the first feature model is a feature model trained by the participant node in the first participant node group; and
sending the updated model parameter to the first participant node group.

**22.** The method according to claim 20 or 21, wherein the method further comprises:
sending a first identifier set to the participant node in the plurality of participant node groups, wherein the first identifier set comprises an identifier of sample data of the inter-feature constraint variable selected by the central node.

**23.** The method according to any one of claims 20 to 22, wherein the method further comprises:

receiving a plurality of pieces of first target gradient information from the participant node in the plurality of participant node groups, wherein the first target gradient information is gradient information corresponding to the inter-feature constraint variable; and
the determining an inter-feature constraint variable comprises:
determining the inter-feature constraint variable based on the plurality of pieces of first target gradient information.

**24.** The method according to any one of claims 20 to 23, wherein the method further comprises:
sending second information to the participant node in the plurality of participant node groups, wherein the second information indicates communication cost information, the communication cost information indicates a communication cost weight of a communication resource, and the communication resource comprises transmission power and/or transmission bandwidth.

**25.** A method for training an intelligent model, comprising:

determining a threshold based on quantization noise information and channel resource information, wherein the quantization noise information represents a loss introduced by quantization encoding and decoding on target information; and
if a metric value of the target information is greater than the threshold, sending quantized target information; or
if the metric value of the target information is less than or equal to the threshold, skipping sending the quantized target information.

**26.** The method according to claim 25, wherein the target information comprises gradient information obtained through an $N^{th}$ time of model training and first target residual information, and the first target residual information is a residual amount that is of gradient information and that is not sent before the gradient information is obtained.

**27.** The method according to claim 25 or 26, wherein the method further comprises:
if the metric value of the target information is greater than the threshold, obtaining second target residual information based on the target information and the quantized target information, wherein the second target residual information is a residual amount that is not sent and that is in the target information.

**28.** The method according to any one of claims 25 to 27, wherein the method further comprises:
if the metric value of the target information is less than or equal to the threshold, determining third target residual information, wherein the third target residual information is the target information.

**29.** The method according to any one of claims 25 to 28, wherein the method further comprises:
obtaining the quantization noise information based on the channel resource information, communication cost information, and the target information, wherein the communication cost information indicates a communication cost weight of a communication resource, and the communication resource comprises transmission power and/or transmission bandwidth.

**30.** The method according to any one of claims 25 to 29, wherein the determining a threshold based on quantization noise information and channel resource information comprises:

determining the transmission bandwidth and/or the transmission power based on the quantization noise information, the communication cost information, the channel resource information, and the target information, wherein the communication cost information indicates the communication cost weight of the communication resource, and the communication resource comprises the transmission power and/or the transmission bandwidth; and
determining the threshold based on the quantization noise information and the communication resource.

**31.** The method according to claim 29 or 30, wherein the method further comprises:
receiving second information, wherein the second information indicates the communication cost information.

**32.** An apparatus for training an intelligent model, comprising:

a transceiver unit, configured to receive first information from a central node, wherein the first information indicates an inter-feature constraint variable, and the inter-feature constraint variable represents a constraint relationship between different features; and
a processing unit, configured to obtain first gradient information based on the inter-feature constraint variable, a model parameter of a first feature model, and first sample data by using a gradient inference model, wherein the first gradient information is gradient information corresponding to the inter-feature constraint variable; and
the transceiver unit is further configured to send the first gradient information to the central node.

**33.** The apparatus according to claim 32, wherein

the transceiver unit is further configured to receive a first identifier set from the central node, wherein the first identifier set comprises an identifier of sample data of the inter-feature constraint variable selected by the central node; and
the processing unit is specifically configured to:

determine that a sample data set of a first participant node comprises the first sample data corresponding to a first identifier, wherein the first identifier belongs to the first identifier set, and the training apparatus is configured on the first participant node; and
obtain the first gradient information based on the inter-feature constraint variable, the model parameter of the first feature model, and the first sample data by using the gradient inference model, wherein the first gradient information is the gradient information corresponding to the inter-feature constraint variable.

**34.** The apparatus according to claim 32 or 33, wherein
the transceiver unit is specifically configured to send quantized first target gradient information to the central node, wherein the first target gradient information comprises the first gradient information, or the first target gradient information comprises the first gradient information and first residual gradient information, and the first residual gradient information represents a residual amount that is of gradient information corresponding to the inter-feature constraint variable and that is not sent to the central node before the first gradient information is obtained.

**35.** The apparatus according to claim 34, wherein
the processing unit is further configured to obtain second residual gradient information based on the first target gradient information and the quantized first target gradient information, wherein the second residual gradient information is a residual amount that is in the first target gradient information and that is not sent to the central node.

**36.** The apparatus according to claim 34 or 35, wherein

the processing unit is further configured to determine a first threshold based on first quantization noise information and channel resource information, wherein the first quantization noise information represents a loss introduced by quantization encoding and decoding on the first target gradient information;

the processing unit is further configured to determine that a metric value of the first target gradient information is greater than the first threshold; and

the transceiver unit is specifically configured to: if the metric value of the first target gradient information is greater than the first threshold, send the quantized first target gradient information to the central node.

37. The apparatus according to claim 36, wherein the processing unit is further configured to: if the metric value of the first target gradient information is less than or equal to the first threshold, determine not to send the quantized first target gradient information to the central node.

38. The apparatus according to claim 37, wherein the processing unit is further configured to: if the metric value of the first target gradient information is less than the first threshold, determine third residual gradient information, wherein the third residual gradient information is the first target gradient information.

39. The apparatus according to any one of claims 36 to 38, wherein the processing unit is further configured to obtain the first quantization noise information based on the channel resource information, communication cost information, and the first target gradient information, wherein the communication cost information indicates a communication cost weight of a communication resource, and the communication resource comprises transmission power and/or transmission bandwidth.

40. The apparatus according to any one of claims 36 to 39, wherein the processing unit is specifically configured to:

determine the transmission bandwidth and/or the transmission power based on the first quantization noise information, the communication cost information, the channel resource information, and the first target gradient information, wherein the communication cost information indicates the communication cost weight of the communication resource, and the communication resource comprises the transmission power and/or the transmission bandwidth; and

determine the first threshold based on the first quantization noise information and the communication resource.

41. The apparatus according to claim 39 or 40, wherein the transceiver unit is further configured to receive second information from the central node, wherein the second information indicates the communication cost information.

42. The apparatus according to any one of claims 32 to 41, wherein the processing unit is further configured to train the first feature model based on the inter-feature constraint variable and model training data, to obtain second gradient information; and

the transceiver unit is further configured to send the second gradient information to the central node.

43. The apparatus according to claim 42, wherein the transceiver unit is specifically configured to send quantized second target gradient information to the central node, wherein the second target gradient information comprises the second gradient information, or the second target gradient information comprises the second gradient information and fourth residual gradient information, and the fourth residual gradient information represents a residual amount that is of gradient information and that is not sent to the central node before the second gradient information is obtained.

44. The apparatus according to claim 43, wherein the processing unit is further configured to obtain fifth residual gradient information based on the second target gradient information and the quantized second target gradient information, wherein the fifth residual gradient information represents a residual amount that is in the second target gradient information and that is not sent to the central node.

45. The apparatus according to claim 43 or 44, wherein the processing unit is further configured to determine a second threshold based on second quantization noise information and the channel resource information, wherein the second quantization noise information represents a loss introduced by quantization encoding and decoding on the second target gradient information;

the processing unit is further configured to determine that a metric value of the second target gradient information is greater than the second threshold; and

the transceiver unit is specifically configured to: if the metric value of the second target gradient information is greater than the second threshold, send the quantized second target gradient information to the central node.

46. The apparatus according to claim 45, wherein the processing unit is further configured to: if the metric value of the second target gradient information is less than or equal to the second threshold, determine not to send the quantized second target gradient information to the central node.

47. The apparatus according to claim 46, wherein the processing unit is further configured to: if the metric value of the second target gradient information is less than the second threshold, determine sixth residual gradient information, wherein the sixth residual gradient information is the second target gradient information.

48. The apparatus according to any one of claims 45 to 47, wherein the processing unit is further configured to obtain the second quantization noise information based on the channel resource information, the communication cost information, and the second target gradient information, wherein the communication cost information indicates the communication cost weight of the communication resource, and the communication resource comprises the transmission power and/or the transmission bandwidth.

49. The apparatus according to any one of claims 45 to 48, wherein the processing unit is specifically configured to:

   determine the transmission bandwidth and/or the transmission power based on the second quantization noise information, the communication cost information, the channel resource information, and the second target gradient information, wherein the communication cost information indicates the communication cost weight of the communication resource, and the communication resource comprises the transmission power and/or the transmission bandwidth; and
   determine the second threshold based on the second quantization noise information and the communication resource.

50. The apparatus according to any one of claims 32 to 49, wherein

   the transceiver unit is further configured to receive third information from the central node, wherein the third information indicates an updated parameter of the first feature model; and
   the processing unit is further configured to update the parameter of the first feature model based on the third information.

51. An apparatus for training an intelligent model, wherein the training apparatus is configured on a central node, and comprises:

   a processing unit, configured to determine an inter-feature constraint variable, wherein the inter-feature constraint variable represents a constraint relationship between different features; and
   a transceiver unit, configured to send first information to a participant node in the plurality of participant node groups, wherein the first information comprises the inter-feature constraint variable.

52. The apparatus according to claim 51, wherein

   the transceiver unit is further configured to receive at least one piece of second target gradient information from a participant node in a first participant node group, wherein the plurality of participant node groups comprise the first participant node group;
   the processing unit is further configured to determine an updated model parameter of a first feature model based on the at least one piece of second target gradient information, wherein the first feature model is a feature model trained by the participant node in the first participant node group; and
   the transceiver unit is further configured to send the updated model parameter to the first participant node group.

53. The apparatus according to claim 51 or 52, wherein the transceiver unit is further configured to send a first identifier set to the participant node in the plurality of participant node groups, wherein the first identifier set comprises an identifier of sample data of the inter-feature constraint variable selected by the central node.

54. The apparatus according to any one of claims 51 to 53, wherein the transceiver unit is further configured to receive a plurality of pieces of first target gradient information from the participant node in the plurality of participant node groups, wherein the first target gradient information is gradient information corresponding to the inter-feature constraint variable; and
the processing unit is specifically configured to determine the inter-feature constraint variable based on the plurality of pieces of first target gradient information.

55. The apparatus according to any one of claims 51 to 54, wherein the transceiver unit is further configured to send second information to the participant node in the plurality of participant node groups, wherein the second information indicates communication cost information, the communication cost information indicates a communication cost weight of a communication resource, and the communication resource comprises transmission power and/or transmission bandwidth.

56. An apparatus for training an intelligent model, comprising:

a processing unit, configured to determine a threshold based on quantization noise information and channel resource information, wherein the quantization noise information represents a loss introduced by quantization encoding and decoding on target information; and
a transceiver unit, configured to: if a metric value of the target information is greater than the threshold, send quantized target information; and
the transceiver unit is further configured to: if the metric value of the target information is less than or equal to the threshold, skip sending the quantized target information.

57. The apparatus according to claim 56, wherein the target information comprises gradient information obtained through an $N^{th}$ time of model training and first target residual information, and the first target residual information is a residual amount that is of gradient information and that is not sent before the gradient information is obtained.

58. The apparatus according to claim 56 or 57, wherein the processing unit is further configured to: if the metric value of the target information is greater than the threshold, obtain second target residual information based on the target information and the quantized target information, wherein the second target residual information is a residual amount that is not sent and that is in the target information.

59. The apparatus according to any one of claims 56 to 58, wherein the processing unit is further configured to: if the metric value of the target information is less than or equal to the threshold, determine third target residual information, wherein the third target residual information is the target information.

60. The apparatus according to any one of claims 56 to 59, wherein the processing unit is further configured to obtain the quantization noise information based on the channel resource information, communication cost information, and the target information, wherein the communication cost information indicates a communication cost weight of a communication resource, and the communication resource comprises transmission power and/or transmission bandwidth.

61. The apparatus according to any one of claims 56 to 60, wherein the processing unit is specifically configured to:

determine the transmission bandwidth and/or the transmission power based on the quantization noise information, the communication cost information, the channel resource information, and the target information, wherein the communication cost information indicates the communication cost weight of the communication resource, and the communication resource comprises the transmission power and/or the transmission bandwidth; and
determine the threshold based on the quantization noise information and the communication resource.

62. The apparatus according to claim 60 or 61, wherein the transceiver unit is further configured to receive second information, wherein the second information indicates the communication cost information.

63. A communication apparatus, comprising at least one processor, coupled to a memory, wherein

the memory is configured to store a program or instructions; and
the at least one processor is configured to execute the program or the instructions, so that the apparatus implements the method according to any one of claims 1 to 19, or implements the method according to any one of claims 20 to 24, or implements the method according to any one of claims 25 to 31.

64. A chip, comprising at least one logic circuit and an input/output interface, wherein
the logic circuit is configured to: control the input/output interface and perform the method according to any one of claims 1 to 19, or implement the method according to any one of claims 20 to 24, or implement the method according to any one of claims 25 to 31.

65. A computer-readable storage medium, storing instructions, wherein when the instructions are run on a computer, the computer is enabled to perform the method according to any one of claims 1 to 19, or implement the method according to any one of claims 20 to 24, or implement the method according to any one of claims 25 to 31.

66. A computer program product, comprising instructions, wherein when the instructions are run on a computer, the computer is enabled to perform the method according to any one of claims 1 to 19, or implement the method according to any one of claims 20 to 24, or implement the method according to any one of claims 25 to 31.

67. A communication system, comprising the training apparatus according to any one of claims 32 to 50, and/or the training apparatus according to any one of claims 56 to 62; and further comprising the training apparatus according to any one of claims 51 to 55.

Central node

Participant node
group 1

Participant node group 2

Participant node
group M

Sample space

$D_{1,1}$ $D_{2,1}$ $D_{M,1}$

$D_{1,2}$

$D_{2,2}$

...

...

...

...

$D_{1,K_1}$ ... $D_{M,K_M}$

Sample data set

Feature space

FIG. 1

| Central node | | First participant node |
|---|---|---|

S201: Send first information, where the first information includes an inter-feature constraint variable, and the inter-feature constraint variable represents a constraint relationship between different features

S202: Obtain first gradient information based on the inter-feature constraint variable, a model parameter of a first feature model, and first sample data by using a gradient inference model, where the first gradient information is gradient information corresponding to the inter-feature constraint variable

S203: Send quantized first target gradient information

FIG. 2

| Central node | | First participant node |
|---|---|---|

S301: Send first information, where the first information includes an inter-feature constraint variable, and the inter-feature constraint variable represents a constraint relationship between different features

S302: Train a first feature model based on the inter-feature constraint variable and model training data, to obtain second gradient information

S303: Send quantized second target gradient information

FIG. 3

$\tilde{g}$ →

**Participant node**

| Quantization encoding module | $\bar{g}$ → | Transceiver module |

Channel

**Central node**

| Transceiver module | $\bar{g}'$ → | Quantization decoding module |

→ $\tilde{g}'$

FIG. 4

Apparatus 500 for training an intelligent model

Processing unit 510

Transceiver unit 520

Storage unit 530

FIG. 5

Communication device 600

| Transceiver 610 | ⟺ | Processor 620 |

Memory

FIG. 6

**EP 4 435 675 A1**

## INTERNATIONAL SEARCH REPORT

International application No.

**PCT/CN2022/140797**

| A. | CLASSIFICATION OF SUBJECT MATTER |
|---|---|

G06N5/04(2023.01)i

According to International Patent Classification (IPC) or to both national classification and IPC

| B. | FIELDS SEARCHED |
|---|---|

Minimum documentation searched (classification system followed by classification symbols)

IPC:  G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 模型, 训练, 节点, 联合, 联邦, 特征, 多种, 多个, 约束, 梯度, 量化, 损失, 信息, 门限, 阈值, 限定, model, training, node, union, joint, federated learning, feature, multiple, constraint, gradient, quantization, loss, information, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111860829 A (GUANGZHISHU (BEIJING) TECHNOLOGY CO., LTD.) 30 October 2020 (2020-10-30)<br>description, paragraphs [0012]-[0051] | 1-67 |
| X | CN 110138475 A (NANJING UNIVERSITY OF POSTS AND TELECOMMUNICATIONS et al.) 16 August 2019 (2019-08-16)<br>description, paragraphs [0005]-[0038] | 25-31, 56-62, 63-66 |
| A | CN 112149266 A (BEIJING BAIDU NETCOM SCIENCE AND TECHNOLOGY CO., LTD.) 29 December 2020 (2020-12-29)<br>entire document | 1-67 |
| A | CN 113591145 A (XIDIAN UNIVERSITY) 02 November 2021 (2021-11-02)<br>entire document | 1-67 |
| A | CN 113642740 A (BAIDU ONLINE NETWORK TECHNOLOGY (BEIJING) CO., LTD.) 12 November 2021 (2021-11-12)<br>entire document | 1-67 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2023** | **15 March 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/140797**

**C. DOCUMENTS CONSIDERED TO BE RELEVANT**

| Category* | Citation of document, with indication, where appropriate, of the relevant passages | Relevant to claim No. |
|---|---|---|
| A | WO 2020199914 A1 (HUAWEI TECHNOLOGIES CO., LTD.) 08 October 2020 (2020-10-08) entire document | 1-67 |

Form PCT/ISA/210 (second sheet) (July 2022)

## INTERNATIONAL SEARCH REPORT
### Information on patent family members

International application No.

**PCT/CN2022/140797**

| Patent document cited in search report | | | Publication date (day/month/year) | Patent family member(s) | Publication date (day/month/year) |
|---|---|---|---|---|---|
| CN | 111860829 | A | 30 October 2020 | None | |
| CN | 110138475 | A | 16 August 2019 | None | |
| CN | 112149266 | A | 29 December 2020 | None | |
| CN | 113591145 | A | 02 November 2021 | None | |
| CN | 113642740 | A | 12 November 2021 | None | |
| WO | 2020199914 | A1 | 08 October 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111582987